(19) Europäisches Patentamt / European Patent Office / Office européen des brevets

(11) **EP 2 341 725 B1**

(12) **EUROPEAN PATENT SPECIFICATION**

(45) Date of publication and mention of the grant of the patent:
**24.08.2016 Bulletin 2016/34**

(21) Application number: **09814031.2**

(22) Date of filing: **04.09.2009**

(51) Int Cl.:
*H04W 74/00* *(2009.01)*    *H04W 74/08* *(2009.01)*

(86) International application number:
**PCT/CN2009/073769**

(87) International publication number:
**WO 2010/031311 (25.03.2010 Gazette 2010/12)**

(54) **METHOD AND BASE STATION FOR ALLOCATING DEDICATED RANDOM ACCESS RESOURCE**

VERFAHREN UND BASISSTATION ZUR ZUORDNUNG DEDIZIERTER DIREKTZUGRIFFSRESSOURCEN

PROCÉDÉ ET STATION DE BASE D'ALLOCATION DE RESSOURCES UTILISANT UN ACCÈS ALÉATOIRE

(84) Designated Contracting States:
**AT BE BG CH CY CZ DE DK EE ES FI FR GB GR HR HU IE IS IT LI LT LU LV MC MK MT NL NO PL PT RO SE SI SK SM TR**

(30) Priority: **22.09.2008 CN 200810166217**

(43) Date of publication of application:
**06.07.2011 Bulletin 2011/27**

(73) Proprietor: ZTE Corporation
**Shenzhen, Guangdong 518057 (CN)**

(72) Inventors:
• **YU, Bin**
  **Shenzhen**
  **Guangdong 518057 (CN)**
• **HAO, Peng**
  **Shenzhen**
  **Guangdong 518057 (CN)**
• **DU, Zhongda**
  **Shenzhen**
  **Guangdong 518057 (CN)**
• **LU, Kexue**
  **Shenzhen**
  **Guangdong 518057 (CN)**

(74) Representative: **Gevers Patents**
  **Intellectual Property House**
  **Holidaystraat 5**
  **1831 Diegem (BE)**

(56) References cited:
WO-A1-00/74416          WO-A1-2008/023932
WO-A1-2008/097023       CN-A- 101 247 658
CN-A- 101 252 389       CN-A- 101 267 679
US-A1- 2007 211 671

• CATT: "Valid PRACH resource for dedicated preamble", 3GPP DRAFT; R2-081672 VALID PRACH RESOURCE FOR DEDICATED PREAMBLE, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG2, no. Shenzhen, China; 20080325, 25 March 2008 (2008-03-25), XP050139389, [retrieved on 2008-03-25]

**Description**

**TECHNICAL FIELD**

The present invention relates to the technical field of mobile communications, particularly to a method and a base station for allocating the dedicated random access resource in non-contention based random access.

**BACKGROUND**

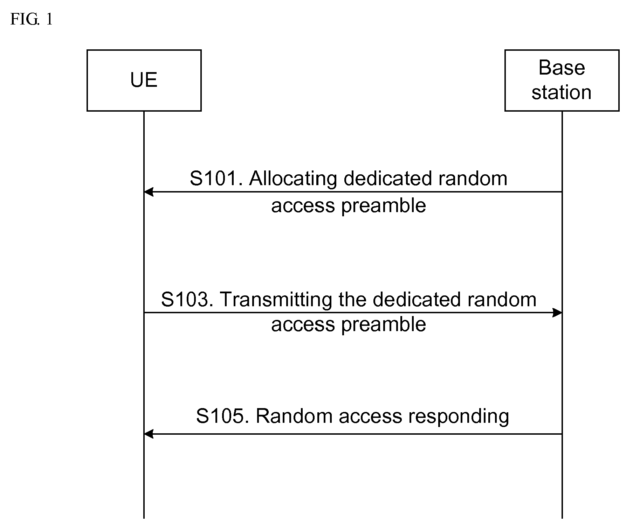

In a long term evolution (LTE) frequency division duplex (FDD)/time division duplex (TDD) system, there are two random access procedures which are contention based random access procedure and non-contention based random access procedure. The non-contention based random access procedure is mainly used for handover and downlink data arrival during out-of-synchronism of the user equipment (UE). As shown in FIG. 1, the non-contention based random access procedure mainly comprises the following steps:

Step S101: downlink dedicated high layer signaling allocates the dedicated random access preamble used for non-contention based random access.

Specifically, this step may include the following steps:

Step 1: a base station (eNodeB) allocates a dedicated random access preamble used for non-contention based random access to a UE. This preamble is different from the preamble used for contention random access in a broadcast message notice.

Step 2: the base station allocates a signaling mode of the dedicated random access preamble to the UE; if this access procedure is used for handover, step 2 may be: the target cell generates a handover command, which is transmitted to the UE through the source base station, containing the random access preamble information for handover; if this access procedure is used during out-of-synchronism of the UE, step 2 may be: the base station allocates a dedicated random access preamble to the UE through a physical downlink control channel (PDCCH). This dedicated random access preamble is used in the scenario in which the downlink data have arrived, while the UE is in an out-of-synchronism state.

Step S103: the UE transmits the allocated dedicated random access preamble over an uplink physical random access channel (PRACH).

Step S105: the UE receives the random access response message of the base station over a downlink shared channel (DL-SCH).

In an LTE system, each PRACH channel has 64 available preambles. Some of the preambles are reserved for non-contention based random access procedure, i.e. reserved as dedicated preambles, while the preambles the UE transmits in contention based random access procedure will not be selected from these preambles. As the LTE system may be configured with a plurality of PRACH channels in a radio frame, while in the foregoing processing flow, the base station does not allocate dedicated random access resource for a certain UE, in other words, the PRACH to which the preambles allocated by the base station to this UE correspond may be a plurality of the foregoing PRACH channels. Therefore, even on different PRACH channels, different UEs can not use the same dedicated preamble, thereby resulting in low utilization efficiency of dedicated preambles.

The features of the preamble of the independent claims are known from the following documents:

D1 CATT: "Valid PRACH resource for dedicated preamble", 3GPP DRAFT; R2-081672 VALID PRACH RESOURCE FOR DEDICATED PREAMBLE, 3RD GENERATION PARTNERSHIP PROJECT (3GPP), MOBILE COMPETENCE CENTRE; 650, ROUTE DES LUCIOLES; F-06921 SOPHIA-ANTIPOLIS CEDEX ; FRANCE, vol. RAN WG2, no. Shenzhen, China; 20080325, 25 March 2008 (2008-03-25), XP050139389, discloses a valid PRACH resource for dedicated preamble which allow allocate inconsecutive PRACH resource for dedicated preamble and add subframe index of the 1st valid PRACH resource to Handover command and PDCCH format for dedicated preamble allocation, which are optional present. For handover case, if inconsecutive PRACH resource is used, interval between valid PRACH resources is 10ms, and this parameter should not exist in Handover command. For DL data arrival case, if inconsecutive PRACH resource is used, interval between valid PRACH resources can be any value, and this parameter should exist in PDCCH format.

D2 WO-A-0074416 discloses a method and system for performing a random access operation between a mobile station and a network element such as a base transceiver station, wherein allowed access slots for random access channels are defined by the network and are signaled to the mobile station. The definition of the allowed access slots is performed on the basis of a parameter set by the base transceiver station (and transmitted to the mobile station which determines the allowed access slots based on the parameter. Thus, the number of allowed access slots can be defined by the network and can be changed dynamically based on the random access messaging load and the hardware requirements.

D3 WO-A-2008/097023 discloses a method of performing a random access procedure in a wireless communication system is provided. The method includes transmitting a random access preamble, and monitoring a downlink control channel in a transmission time interval (TTI) window for a random access response, the TTI window comprising a plurality of TTIs, wherein a TTI is an interval to search a random access-radio network temporary identity (RA-RNTI) transmitted on the downlink control channel and monitoring the downlink control channel for the random access response is stopped when the random access response including an random access preamble identifier corresponding to the transmitted random access preamble is received.

D4 WO-A-2008/023932 discloses a method for enabling a user equipment to perform a random access procedure in a wireless communication system. The method includes transmitting a random access preamble and receiving a random access response as a response to the random access preamble. The random access response is addressed by a random access identifier. The random access identifier is mapped to radio resources used for transmitting the random access preamble. The user equipment can immediately confirm its random access response and perform further efficient random access procedure.

## SUMMARY

For this reason, the present invention provides a method for allocating dedicated random access resource to solve the problem of low utilization efficiency in the prior art.

In order to realize the object of the present invention, a method for allocating the dedicated random access resource is provided according to one aspect of the present invention, as claimed in claim 1.

In order to realize the object of the present invention, a base station is provided according to another aspect of the present invention, as claimed in claim 12.

By at least one of the foregoing solutions of the present invention, the base station allocates the dedicated random access preamble to the UE, and allocates the PRACH to which the dedicated random access preamble corresponds; and the time domain and the frequency domain of the PRACH to which the dedicated random access preamble allocated to the UE corresponds are informed through signaling. As a result, the same preamble may be allocated for different PRACH channels to different UEs, thereby improving the utilization efficiency of the dedicated preambles.

Other characteristics and advantages of the present invention will be illustrated in the subsequent Description, or partially become obvious through the Description or understood through implementation of the present invention. The object and other advantages of the present invention may be realized and acquired through the structures particularly indicated in the Description, Claims and Drawings.

## BRIEF DESCRIPTION OF THE DRAWINGS

The drawings are intended to provide further understanding of the present invention and constitute a part of the Description. They are intended to explain the present invention in conjunction with the embodiments of the present invention and not to limit the present invention. Among the drawings:

FIG. 1 is a flow chart of non-contention based random access according to the prior art;

FIG. 2A is a schematic diagram of Type 1 frame structure in the embodiment of the present invention;

FIG. 2B is a schematic diagram of Type 2 frame structure in the embodiment of the present invention;

FIG. 3 is a schematic diagram illustrating the structure of PRACH in the embodiment of the present invention;

FIG. 4 is a flow chart of the method for allocating the dedicated random access resource according to the embodiment of the present invention;

FIG. 5 is a flow chart of non-contention based random access in the embodiment of the present invention;

FIG. 6A is a schematic diagram of the time-frequency domain locations of PRACH in the embodiment of the present invention;

FIG. 6B is another schematic diagram of the time-frequency domain locations of PRACH in the embodiment of the present invention; and

FIG. 7 is a block diagram illustrating the structure of the base station according to the embodiment of the present invention.

## DETAILED DESCRIPTION

Function overview

As described above, in order to address the problem of low utilization efficiency of preambles in the prior art, the present invention provides a solution for allocating dedicated random access resource. In this solution, when the base station allocates the dedicated random access preamble to the UE, it allocates PRACH channels for this dedicated random access preamble, i.e. the base station allocates random access resource to this UE, and the time domain and the frequency domain where the allocated PRACH locates are sent to the UE through the dedicated signaling, to notify the UE that which PRACH channel in the radio frame the dedicated random access preamble allocated to the UE should be transmitted over. Consequently, when the dedicated random access preamble is restricted, the chance to use non-contention based random access procedure will be increased, i.e. different UEs may use the same dedicated random access preamble over different PRACH channels.

If without conflict, the embodiments of the present invention and the characteristics in the embodiments may be combined.

The preferred embodiments of the present invention are described below in conjunction with the drawings. It should be understood that the preferred embodiments described here are intended to illustrate and not to limit the present invention.

In order to more easily understand the present invention, the frame structure, preamble format, random access configuration, and frequency domain multiplexing and mapping of the LTE system will be briefly introduced below at first.

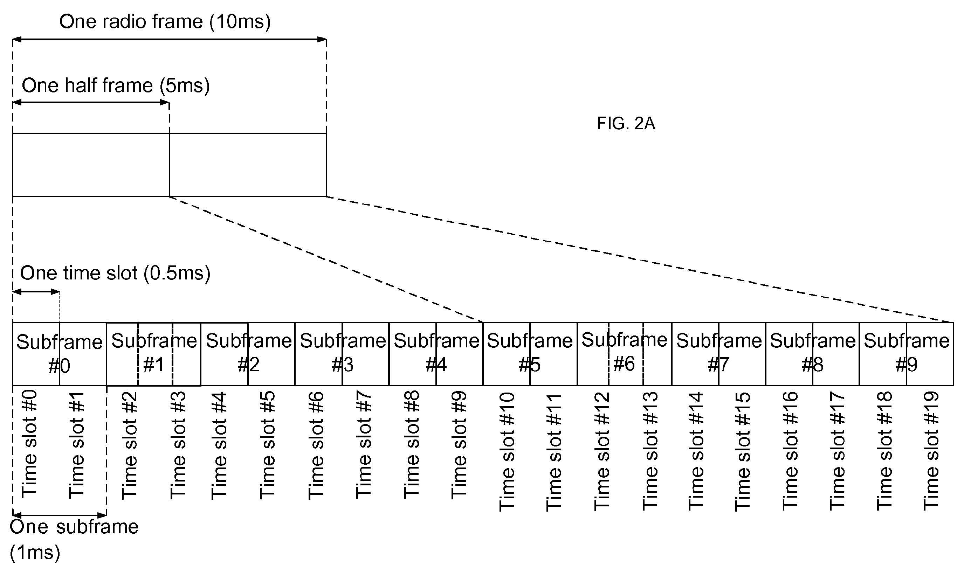

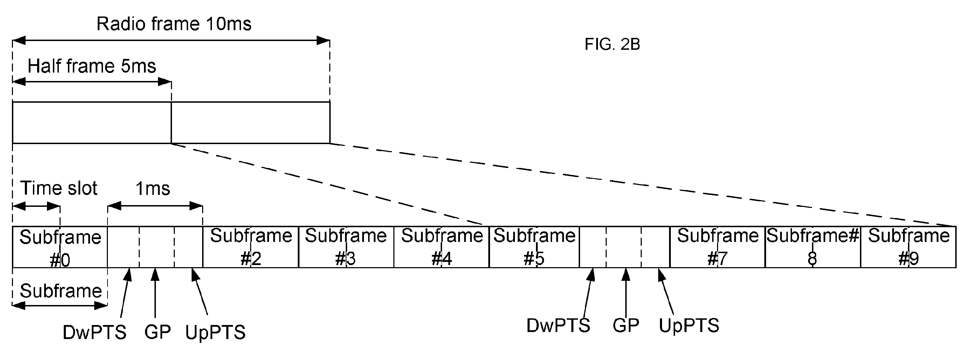

In the LTE system, there are two types of the frame structure, which are Type 1 and Type 2. The Type 1 frame structure, which is shown in FIG. 2A, may be applied to an FDD mode. The Type 2 frame structure, which is shown in FIG. 2B, may be applied to a TDD mode. As shown in FIG. 2A or FIG. 2B, in the LTE frame structure, a radio frame with length of 10ms is divided into two half frames with length of 5ms each, and each half frame consists of five subframes with length of 1 ms each. Except the special subframes in the Type 2 frame structure, other subframes are all constituted by two time slots with length of 0.5ms each. The special subframes in the Type 2 frame structure comprise three special time slots which are a downlink pilot time slot (DwPTS), a guard period (GP) and an uplink pilot time slot (UpPTS). In the LTE frame structure, the duration of an uplink/downlink symbol is 66.7us, and each uplink/downlink symbol has a cyclic prefix (CP). In the LTE, two types of the CP are defined, which are a normal CP and an extended CP. For the normal CPs with length of 5.21 us and 4.69us, a time slot contains 7 uplink/downlink symbols. The length of the CP of the first symbol is 5.21 us and the length of the CP of the rest 6 symbols is 4.69us; for the extended CP with length of 16.67us, a time slot contains 6 uplink/downlink symbols.

In the Type 2 frame structure, subframe 0, subframe 5 and DwPTS are always used for downlink transmission, and subframe 2 and UpPTS are always used for uplink transmission. When there are 2 downlink-to-uplink switch-points within 10ms, subframe 7 will also be used for uplink transmission. Whether other subframes are used for uplink transmission or downlink transmission is determined by the uplink and downlink configurations. The current uplink and downlink proportional configuration set is shown in Table 1. There are 7 types of the uplink and downlink configurations. Wherein, D denotes the subframe used for downlink transmission, U denotes the subframe used for uplink transmission, and S denotes the special subframe, containing DwPTS, GP and UpPTS. In the Type 1 frame structure, the uplink and downlink adopt different frequency resources, so the uplink and downlink always have a same number of subframes.

Table 1 proportional configuration set of the Uplink and downlink in the LTE TDD

| Configuration No. | Switch-point periodicity | Subframe number | | | | | | | | | |
|---|---|---|---|---|---|---|---|---|---|---|---|
| | | 0 | 1 | 2 | 3 | 4 | 5 | 6 | 7 | 8 | 9 |
| 0 | 5 ms | D | S | U | U | U | D | S | U | U | U |
| 1 | 5 ms | D | S | U | U | D | D | S | U | U | D |
| 2 | 5 ms | D | S | U | D | D | D | S | U | D | D |
| 3 | 10 ms | D | S | U | U | U | D | D | D | D | D |

(continued)

| Configuration No. | Switch-point periodicity | 0 | 1 | 2 | 3 | 4 | 5 | 6 | 7 | 8 | 9 |
|---|---|---|---|---|---|---|---|---|---|---|---|
| | | | | | | **Subframe number** | | | | | |
| 4 | 10 ms | D | S | U | U | D | D | D | D | D | D |
| 5 | 10 ms | D | S | U | D | D | D | D | D | D | D |
| 6 | 5 ms | D | S | U | U | U | D | S | U | U | D |

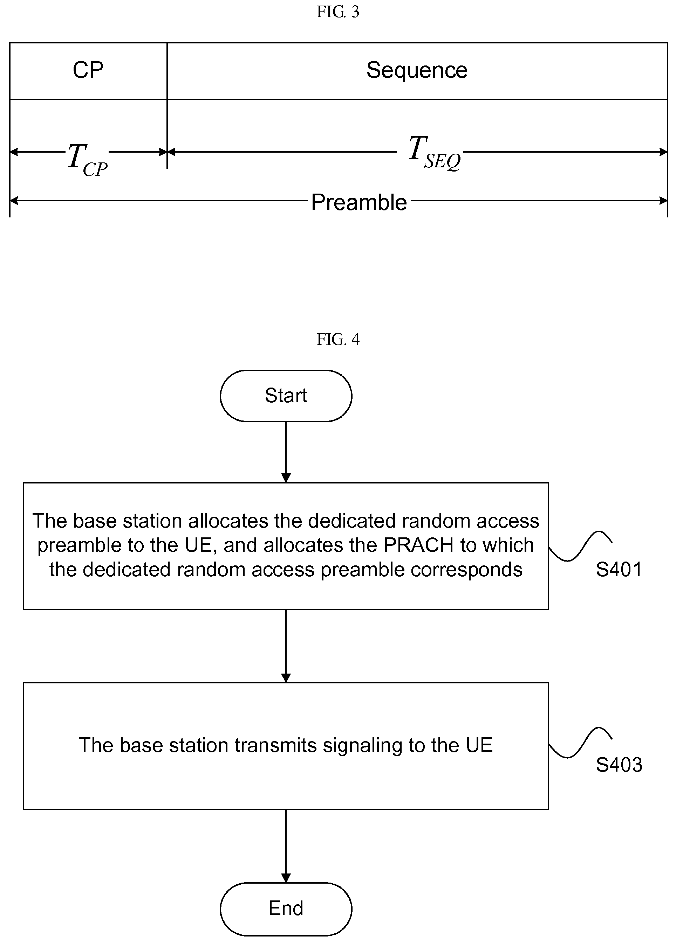

The structure of the PRACH channel in the LTE system is shown in FIG. 3. A preamble consists of a CP and a sequence. The length of the CP and/or the sequence varies with the preamble format. The sorts of the preamble formats supporting both the TDD mode and the FDD mode in the current LTE system are listed in Table 2.

Table 2 Preamble formats

| Preamble format | $T_{CP}$ | $T_{SEQ}$ |
|---|---|---|
| **0** | $3168 \cdot T_s$ | $24576 \cdot T_s$ |
| **1** | $21024 \cdot T_s$ | $24576 \cdot T_s$ |
| **2** | $6240 \cdot T_s$ | $2 \cdot 24576 \cdot T_s$ |
| **3** | $21024 \cdot T_s$ | $2 \cdot 24576 \cdot T_s$ |
| **4** | | |
| **(This format is applied to TDD mode only)** | $448 \cdot T_s$ | $4096 \cdot T_s$ |

Among the foregoing preamble formats, preamble formats 0-3 are transmitted in the ordinary uplink subframes of a TDD or FDD system, while preamble format 4 is transmitted in an UpPTS of TDD system, specifically:

preamble format 0 is transmitted in an ordinary uplink subframe;

preamble formats 1 or 2 are transmitted in two ordinary uplink subframes;

preamble format 3 is transmitted in three ordinary uplink subframes; and

preamble format 4 is transmitted in the UpPTS.

In the frequency domain, each of the foregoing PRACH channels occupies 6 resource blocks (RB). Each RB contains 12 sub-carriers. The bandwidth of each sub-carrier is 15 kHz. The random access configurations of the LTE FDD and TDD systems are shown in Table 3 and Table 4, respectively.

Table 3 Random access configurations of the LTE FDD

| PRACH Configuration Index | Preamble format | System frame number | Subframe number | PRACH configuration Index | Preamble Format | System frame number | Subframe number |
|---|---|---|---|---|---|---|---|
| 0 | 0 | Even | 1 | 32 | 2 | Even | 1 |
| 1 | 0 | Even | 4 | 33 | 2 | Even | 4 |
| 2 | 0 | Even | 7 | 34 | 2 | Even | 7 |
| 3 | 0 | Any | 1 | 35 | 2 | Any | 1 |
| 4 | 0 | Any | 4 | 36 | 2 | Any | 4 |
| 5 | 0 | Any | 7 | 37 | 2 | Any | 7 |
| 6 | 0 | Any | 1, 6 | 38 | 2 | Any | 1, 6 |
| 7 | 0 | Any | 2, 7 | 39 | 2 | Any | 2, 7 |
| 8 | 0 | Any | 3, 8 | 40 | 2 | Any | 3, 8 |
| 9 | 0 | Any | 1, 4, 7 | 41 | 2 | Any | 1, 4, 7 |
| 10 | 0 | Any | 2, 5, 8 | 42 | 2 | Any | 2, 5, 8 |

(continued)

| PRACH Configuration Index | Preamble format | System frame number | Subframe number | PRACH configuration Index | Preamble Format | System frame number | Subframe number |
|---|---|---|---|---|---|---|---|
| 11 | 0 | Any | 3, 6, 9 | 43 | 2 | Any | 3, 6, 9 |
| 12 | 0 | Any | 0, 2, 4, 6, 8 | 44 | 2 | Any | 0, 2, 4, 6, 8 |
| 13 | 0 | Any | 1, 3, 5, 7, 9 | 45 | 2 | Any | 1, 3, 5, 7, 9 |
| 14 | 0 | Any | 0, 1, 2, 3, 4, 5, 6, 7, 8,9 | 46 | N/A | N/A | N/A |
| 15 | 0 | Even | 9 | 47 | 2 | Even | 9 |
| 16 | 1 | Even | 1 | 48 | 3 | Even | 1 |
| 17 | 1 | Even | 4 | 49 | 3 | Even | 4 |
| 18 | 1 | Even | 7 | 50 | 3 | Even | 7 |
| 19 | 1 | Any | 1 | 51 | 3 | Any | 1 |
| 20 | 1 | Any | 4 | 52 | 3 | Any | 4 |
| 21 | 1 | Any | 7 | 53 | 3 | Any | 7 |
| 22 | 1 | Any | 1, 6 | 54 | 3 | Any | 1, 6 |
| 23 | 1 | Any | 2, 7 | 55 | 3 | Any | 2, 7 |
| 24 | 1 | Any | 3, 8 | 56 | 3 | Any | 3, 8 |
| 25 | 1 | Any | 1, 4, 7 | 57 | 3 | Any | 1, 4, 7 |
| 26 | 1 | Any | 2, 5, 8 | 58 | 3 | Any | 2, 5, 8 |
| 27 | 1 | Any | 3, 6, 9 | 59 | 3 | Any | 3, 6, 9 |
| 28 | 1 | Any | 0, 2, 4, 6, 8 | 60 | N/A | N/A | N/A |
| 29 | 1 | Any | 1, 3, 5, 7, 9 | 61 | N/A | N/A | N/A |
| 30 | N/A | N/A | N/A | 62 | N/A | N/A | N/A |
| 31 | 1 | Even | 9 | 63 | 3 | Even | 9 |

Table 4 Random access configurations of the LTE TDD

| PRACH Configuration Index | Preamble Format | Density Per 10 ms ($D_{RA}$) | Version ($r_{RA}$) | PRACH Configuration Index | Preamble Format | Density Per 10 ms ($D_{RA}$) | Version ($r_{RA}$) |
|---|---|---|---|---|---|---|---|
| 0 | 0 | 0.5 | 0 | 32 | 2 | 0.5 | 2 |
| 1 | 0 | 0.5 | 1 | 33 | 2 | 1 | 0 |
| 2 | 0 | 0.5 | 2 | 34 | 2 | 1 | 1 |
| 3 | 0 | 1 | 0 | 35 | 2 | 2 | 0 |
| 4 | 0 | 1 | 1 | 36 | 2 | 3 | 0 |
| 5 | 0 | 1 | 2 | 37 | 2 | 4 | 0 |
| 6 | 0 | 2 | 0 | 38 | 2 | 5 | 0 |
| 7 | 0 | 2 | 1 | 39 | 2 | 6 | 0 |
| 8 | 0 | 2 | 2 | 40 | 3 | 0.5 | 0 |
| 9 | 0 | 3 | 0 | 41 | 3 | 0.5 | 1 |

(continued)

| PRACH Configuration Index | Preamble Format | Density Per 10 ms ($D_{RA}$) | Version ($r_{RA}$) | PRACH Configuration Index | Preamble Format | Density Per 10 ms ($D_{RA}$) | Version ($r_{RA}$) |
|---|---|---|---|---|---|---|---|
| 10 | 0 | 3 | 1 | 42 | 3 | 0.5 | 2 |
| 11 | 0 | 3 | 2 | 43 | 3 | 1 | 0 |
| 12 | 0 | 4 | 0 | 44 | 3 | 1 | 1 |
| 13 | 0 | 4 | 1 | 45 | 3 | 2 | 0 |
| 14 | 0 | 4 | 2 | 46 | 3 | 3 | 0 |
| 15 | 0 | 5 | 0 | 47 | 3 | 4 | 0 |
| 16 | 0 | 5 | 1 | 48 | 4 | 0.5 | 0 |
| 17 | 0 | 5 | 2 | 49 | 4 | 0.5 | 1 |
| 18 | 0 | 6 | 0 | 50 | 4 | 0.5 | 2 |
| 19 | 0 | 6 | 1 | 51 | 4 | 1 | 0 |
| 20 | 1 | 0.5 | 0 | 52 | 4 | 1 | 1 |
| 21 | 1 | 0.5 | 1 | 53 | 4 | 2 | 0 |
| 22 | 1 | 0.5 | 2 | 54 | 4 | 3 | 0 |
| 23 | 1 | 1 | 0 | 55 | 4 | 4 | 0 |
| 24 | 1 | 1 | 1 | 56 | 4 | 5 | 0 |
| 25 | 1 | 2 | 0 | 57 | 4 | 6 | 0 |
| 26 | 1 | 3 | 0 | | | | |
| 27 | 1 | 4 | 0 | | | | |
| 28 | 1 | 5 | 0 | | | | |
| 29 | 1 | 6 | 0 | | | | |
| 30 | 2 | 0.5 | 0 | | | | |
| 31 | 2 | 0.5 | 1 | | | | |

The configuration index (PRACH Configuration Index) of each random access corresponds to the combination of a set of configuration parameters and indicates the following content: PRACH format, PRACH density (the number of PRACH channels configured in each radio frame) and the time domain location transmitted by each PRACH (in the FDD mode, this index directly corresponds to the initial subframe number of the PRACH-time-domain) or the version number configured for the time domain (in the TDD mode, this index indicates the version number of a few different mapping modes of the time domain). The configuration index is informed to the UE through a broadcast message. For the LTE FDD system, there is one PRACH channel at most in the frequency domain, and a radio frame may contain 10 PRACH channels at most, which are all divided in the time domain. The concrete time domain location is described in Table 3. In the frequency domain location, all PRACH channels are same and configured by the base station in a unified way. For the LTE TDD system, a radio frame may contain 6 PRACH channels at most and the mapping of the PRACH channel adopts a way of first time domain then frequency domain. When the resource of the time domain is not enough to carry the configured PRACH density through time domain multiplexing on the precondition that the PRACH does not overlap in the time domain, a plurality of the PRACH channels may be multiplexed in the frequency domain, so the frequency domain may contain 6 PRACH channels at most.

In the LTE TDD system, corresponding to the PRACH configuration in Table 4, under the different uplink and downlink configurations as shown in Table 1, the mapping locations of the needed PRACH channels in the time domain of respective uplink resource are shown in Table 5. The expression format of the quaternion in the table is $(f_{RA}, t_{RA}^0, t_{RA}^1, t_{RA}^2)$, indicating a specific random access physical resource or in other words, indicating a specific PRACH channel, wherein $f_{RA}$ denotes the index of a specific PRACH channel in the frequency domain at the time domain location designated by $\left( t_{RA}^{0}, t_{RA}^{1}, t_{RA}^{2} \right)$, or in other words, $f_{RA}$ denotes a specific PRACH channel in the frequency domain at this time domain location, $f_{RA} \in \{0,1,2,3,4,5\}$. $t_{RA}^{0} = 0,1,2$ indicates that a specific PRACH channel is re-transmitted at the intra-frame location indicated by $\left( t_{RA}^{1}, t_{RA}^{2} \right)$ in all radio frames, or only in even radio frames or only in odd radio frames. $t_{RA}^{1} = 0,1$ indicates that a specific PRACH corresponds to the first half frame or the second half frame in a radio frame. For the PRACH channel using preamble formats 0-3, $t_{RA}^{2}$ denotes the serial number of the uplink subframe where the starting point of time-domain mapping of the PRACH channel lies in the first half frame or the second half frame. This serial number is numbered by starting from 0 in order. 0 corresponds to the first uplink subframe in each half frame except the UpPTS; the PRACH channel using preamble format 4 is always configured to the UpPTS, and $t_{RA}^{2}$ in the table is expressed with (*).

Table 5 Mapping of the random access channels of the LTE TDD in the time domain

| PRACH Configuration Index | Uplink and downlink proportional configuration (See Table 1) | | | | | | |
|---|---|---|---|---|---|---|---|
| | 0 | 1 | 2 | 3 | 4 | 5 | 6 |
| 0 | (0,1,0,2) | (0,1,0,1) | (0,1,0,0) | (0,1,0,2) | (0,1,0,1) | (0,1,0,0) | (0,1,0,2) |
| 1 | (0,2,0,2) | (0,2,0,1) | (0,2,0,0) | (0,2,0,2) | (0,2,0,1) | (0,2,0,0) | (0,2,0,2) |
| 2 | (0,1,1,2) | (0,1,1,1) | (0,1,1,0) | (0,1,0,1) | (0,1,0,0) | N/A | (0,1,1,1) |
| 3 | (0,0,0,2) | (0,0,0,1) | (0,0,0,0) | (0,0,0,2) | (0,0,0,1) | (0,0,0,0) | (0,0,0,2) |
| 4 | (0,0,1,2) | (0,0,1,1) | (0,0,1,0) | (0,0,0,1) | (0,0,0,0) | N/A | (0,0,1,1) |
| 5 | (0,0,0,1) | (0,0,0,0) | N/A | (0,0,0,0) | N/A | N/A | (0,0,0,1) |
| 6 | (0,0,0,2) (0,0,1,2) | (0,0,0,1) (0,0,1,1) | (0,0,0,0) (0,0,1,0) | (0,0,0,2) (0,0,0,1) | (0,0,0,1) (0,0,0,0) | (0,0,0,0) (1,0,0,0) | (0,0,0,2) (0,0,1,1) |
| 7 | (0,0,0,1) (0,0,1,1) | (0,0,0,0) (0,0,1,0) | N/A | (0,0,0,0) (0,0,0,2) | N/A | N/A | (0,0,0,1) (0,0,1,0) |
| 8 | (0,0,0,0) (0,0,1,0) | N/A | N/A | (0,0,0,1) (0,0,0,0) | N/A | N/A | (0,0,0,0) (0,0,1,1) |
| 9 | (0,0,0,2) (0,0,1,2) (0,0,0,1) | (0,0,0,1) (0,0,1,1) (0,0,0,0) | (0,0,0,0) (0,0,1,0) (1,0,0,0) | (0,0,0,2) (0,0,0,1) (0,0,0,0) | (0,0,0,1) (0,0,0,0) (1,0,0,1) | (0,0,0,0) (1,0,0,0) (2,0,0,0) | (0,0,0,2) (0,0,1,1) (0,0,0,1) |
| 10 | (0,0,1,1) (0,0,0,0) (0,0,1,0) | (0,0,1,0) (0,0,0,1) (0,0,1,1) | (0,0,1,0) (0,0,0,0) (1,0,1,0) | N/A | (0,0,0,0) (0,0,0,1) (1,0,0,0) | N/A | (0,0,1,0) (0,0,0,0) (0,0,0,2) |
| 11 | N/A | (0,0,0,0) (0,0,1,0) (0,0,0,1) | N/A | N/A | N/A | N/A | (0,0,1,1) (0,0,0,1) (0,0,1,0) |
| 12 | (0,0,0,2) (0,0,1,2) (0,0,0,1) (0,0,1,1) | (0,0,0,1) (0,0,1,1) (0,0,0,0) (0,0,1,0) | (0,0,0,0) (0,0,1,0) (1,0,0,0) (1,0,1,0) | (0,0,0,2) (0,0,0,1) (0,0,0,0) (1,0,0,2) | (0,0,0,1) (0,0,0,0) (1,0,0,1) (1,0,0,0) | (0,0,0,0) (1,0,0,0) (2,0,0,0) (3,0,0,0) | (0,0,0,2) (0,0,1,1) (0,0,0,1) (0,0,1,0) |
| 13 | (0,0,0,0) (0,0,1,0) (0,0,0,2) | N/A | N/A | (0,0,0,1) (0,0,0,0) (0,0,0,2) | N/A | N/A | (0,0,0,0) (0,0,0,2) (0,0,1,1) |

(continued)

| PRACH Configuration Index | Uplink and downlink proportional configuration (See Table 1) | | | | | | |
|---|---|---|---|---|---|---|---|
| | 0 | 1 | 2 | 3 | 4 | 5 | 6 |
| | (0,0,1,2) | | | (1,0,0,1) | | | (0,0,0,1) |
| 14 | (0,0,0,1)<br>(0,0,1,1)<br>(0,0,0,0)<br>(0,0,1,0) | N/A | N/A | (0,0,0,0)<br>(0,0,0,2)<br>(0,0,0,1)<br>(1,0,0,0) | N/A | N/A | (0,0,1,0)<br>(0,0,0,0)<br>(0,0,0,2)<br>(0,0,1,1) |
| 15 | (0,0,0,2)<br>(0,0,1,2)<br>(0,0,0,1)<br>(0,0,1,1)<br>(0,0,0,0) | (0,0,0,1)<br>(0,0,1,1)<br>(0,0,0,0)<br>(0,0,1,0)<br>(1,0,0,1) | (0,0,0,0)<br>(0,0,1,0)<br>(1,0,0,0)<br>(1,0,1,0)<br>(2,0,0,0) | (0,0,0,2)<br>(0,0,0,1)<br>(0,0,0,0)<br>(1,0,0,2)<br>(1,0,0,1) | (0,0,0,1)<br>(0,0,0,0)<br>(1,0,0,1)<br>(1,0,0<br>(2,0,0,1) | (0,0,0,0)<br>(1,0,0,0)<br>(2,0,0,0)<br>(3,0,0,0)<br>(4,0,0,0) | (0,0,0,2)<br>(0,0,1,1)<br>(0,0,0,1)<br>(0,0,1,0)<br>(0,0,0,0) |
| 16 | (0,0,1,0)<br>(0,0,0,2)<br>(0,0,1,2)<br>(0,0,0,1)<br>(0,0,1,1) | (0,0,1,1)<br>(0,0,0,0)<br>(0,0,1,0)<br>(0,0,0,1)<br>(1,0,1,1) | (0,0,1,0)<br>(0,0,0,0)<br>(1,0,1,0<br>(1,0,0,0)<br>(2,0,1,0) | (0,0,0,0)<br>(0,0,0,2)<br>(0,0,0,1)<br>(1,0,0,0)<br>(1,0,0,2) | (0,0,0,0)<br>(0,0,0,1)<br>(1,0,0,0)<br>(1,0,0,1)<br>(2,0,0,0) | N/A | N/A |
| 17 | (0,0,0,0)<br>(0,0,1,0)<br>(0,0,0,2)<br>(0,0,1,2)<br>(0,0,0,1) | (0,0,0,0)<br>(0,0,1,0)<br>(0,0,0,1)<br>(0,0,1,1)<br>(1,0,0,0) | N/A | (0,0,0,1)<br>(0,0,0,0)<br>(0,0,0,2)<br>(1,0,0,1)<br>(1,0,0,0) | N/A | N/A | N/A |
| 18 | (0,0,0,2)<br>(0,0,1,2)<br>(0,0,0,1)<br>(0,0,1,1)<br>(0,0,0,0)<br>(0,0,1,0) | (0,0,0,1)<br>(0,0,1,1)<br>(0,0,0,0)<br>(0,0,1,0)<br>(1,0,0,1)<br>(1,0,1,1) | (0,0,0,0)<br>(0,0,1,0)<br>(1,0,0,0)<br>(1,0,1,0)<br>(2,0,0,0)<br>(2,0,1,0) | (0,0,0,2)<br>(0,0,0,1)<br>(0,0,0,0)<br>(1,0,0,2)<br>(1,0,0,1)<br>(1,0,0,0) | (0,0,0,1)<br>(0,0,0,0)<br>(1,0,0,1)<br>(1,0,0,0)<br>(2,0,0,1)<br>(2,0,0,0) | (0,0,0,0)<br>(1,0,0,0)<br>(2,0,0,0)<br>(3,0,0,0)<br>(4,0,0,0)<br>(5,0,0,0) | (0,0,0,2)<br>(0,0,1,1)<br>(0,0,0,1)<br>(0,0,1,0)<br>(0,0,0,0)<br>(1,0,0,2) |
| 19 | N/A | (0,0,0,0)<br>(0,0,1,0)<br>(0,0,0,1)<br>(0,0,1,1)<br>(1,0,0,0)<br>(1,0,1,0) | N/A | N/A | N/A | N/A | (0,0,1,1)<br>(0,0,0,1)<br>(0,0,1,0)<br>(0,0,0,0)<br>(0,0,0,2)<br>(1,0,1,1) |
| 20/30 | (0,1,0,1) | (0,1,0,0) | N/A | (0,1,0,1) | (0,1,0,0) | N/A | (0,1,0,1) |
| 21/31 | (0,2,0,1) | (0,2,0,0) | N/A | (0,2,0,1) | (0,2,0,0) | N/A | (0,2,0,1) |
| 22/32 | (0,1,1,1) | (0,1,1,0) | N/A | N/A | N/A | N/A | (0,1,1,0) |
| 23/33 | (0,0,0,1) | (0,0,0,0) | N/A | (0,0,0,1) | (0,0,0,0) | N/A | (0,0,0,1) |
| 24/34 | (0,0,1,1) | (0,0,1,0) | N/A | N/A | N/A | N/A | (0,0,1,0) |
| 25/35 | (0,0,0,1)<br>(0,0,1,1) | (0,0,0,0)<br>(0,0,1,0) | N/A | (0,0,0,1)<br>(1,0,0,1) | (0,0,0,0)<br>(1,0,0,0) | N/A | (0,0,0,1)<br>(0,0,1,0) |
| 26/36 | (0,0,0,1)<br>(0,0,1,1)<br>(1,0,0,1) | (0,0,0,0)<br>(0,0,1,0)<br>(1,0,0,0) | N/A | (0,0,0,1)<br>(1,0,0,1)<br>(2,0,0,1) | (0,0,0,0)<br>(1,0,0,0)<br>(2,0,0,0) | N/A | (0,0,0,1)<br>(0,0,1,0)<br>(1,0,0,1) |
| | (0,0,0,1) | (0,0,0,0) | | (0,0,0,1) | (0,0,0,0) | | (0,0,0,1) |

(continued)

| PRACH Configuration Index | Uplink and downlink proportional configuration (See Table 1) | | | | | | |
|---|---|---|---|---|---|---|---|
| | 0 | 1 | 2 | 3 | 4 | 5 | 6 |
| 27/37 | (0,0,1,1) (1,0,0,1) (1,0,1,1) | (0,0,1,0) (1,0,0,0) (1,0,1,0) | N/A | (1,0,0,1) (2,0,0,1) (3,0,0,1) | (1,0,0,0) (2,0,0,0) (3,0,0,0) | N/A | (0,0,1,0) (1,0,0,1) (1,0,1,0) |
| 28/38 | (0,0,0,1) (0,0,1,1) (1,0,0,1) (1,0,1,1) (2,0,0,1) | (0,0,0,0) (0,0,1,0) (1,0,0,0) (1,0,1,0) (2,0,0,0) | N/A | (0,0,0,1) (1,0,0,1) (2,0,0,1) (3,0,0,1) (4,0,0,1) | (0,0,0,0) (1,0,0,0) (2,0,0,0) (3,0,0,0) (4,0,0,0) | N/A | (0,0,0,1) (0,0,1,0) (1,0,0,1) (1,0,1,0) (2,0,0,1) |
| 29 /39 | (0,0,0,1) (0,0,1,1) (1,0,0,1) (1,0,1,1) (2,0,0,1) (2,0,1,1) | (0,0,0,0) (0,0,1,0) (1,0,0,0) (1,0,1,0) (2,0,0,0) (2,0,1,0) | N/A | (0,0,0,1) (1,0,0,1) (2,0,0,1) (3,0,0,1) (4,0,0,1) (5,0,0,1) | (0,0,0,0) (1,0,0,0) (2,0,0,0) (3,0,0,0) (4,0,0,0) (5,0,0,0) | N/A | (0,0,0,1) (0,0,1,0) (1,0,0,1) (1,0,1,0) (2,0,0,1) (2,0,1,0) |
| 40 | (0,1,0,0) | N/A | N/A | (0,1,0,0) | N/A | N/A | (0,1,0,0) |
| 41 | (0,2,0,0) | N/A | N/A | (0,2,0,0) | N/A | N/A | (0,2,0,0) |
| 42 | (0,1,1,0) | N/A | N/A | N/A | N/A | N/A | N/A |
| 43 | (0,0,0,0) | N/A | N/A | (0,0,0,0) | N/A | N/A | (0,0,0,0) |
| 44 | (0,0,1,0) | N/A | N/A | N/A | N/A | N/A | N/A |
| 45 | (0,0,0,0) (0,0,1,0) | N/A | N/A | (0,0,0,0) (1,0,0,0) | N/A | N/A | (0,0,0,0) (1,0,0,0) |
| 46 | (0,0,0,0) (0,0,1,0) (1,0,0,0) | N/A | N/A | (0,0,0,0) (1,0,0,0) (2,0,0,0) | N/A | N/A | (0,0,0,0) (1,0,0,0) (2,0,0,0) |
| 47 | (0,0,0,0) (0,0,1,0) (1,0,0,0) (1,0,1,0) | N/A | N/A | (0,0,0,0) (1,0,0,0) (2,0,0,0) (3,0,0,0) | N/A | N/A | (0,0,0,0) (1,0,0,0) (2,0,0,0) (3,0,0,0) |
| 48 | (0,1,0,*) | (0,1,0,*) | (0,1,0,*) | (0,1,0,*) | (0,1,0,*) | (0,1,0,*) | (0,1,0,*) |
| 49 | (0,2,0,*) | (0,2,0,*) | (0,2,0,*) | (0,2,0,*) | (0,2,0,*) | (0,2,0,*) | (0,2,0,*) |
| 50 | (0,1,1,*) | (0,1,1,*) | (0,1,1,*) | N/A | N/A | N/A | (0,1,1,*) |
| 51 | (0,0,0,*) | (0,0,0,*) | (0,0,0,*) | (0,0,0,*) | (0,0,0,*) | (0,0,0,*) | (0,0,0,*) |
| 52 | (0,0,1,*) | (0,0,1,*) | (0,0,1,*) | N/A | N/A | N/A | (0,0,1,*) |
| 53 | (0,0,0,*) (0,0,1,*) | (0,0,0,*) (0,0,1,*) | (0,0,0,*) (0,0,1,*) | (0,0,0,*) (1,0,0,*) | (0,0,0,*) (1,0,0,*) | (0,0,0,*) (1,0,0,*) | (0,0,0,*) (0,0,1,*) |
| 54 | (0,0,0,*) (0,0,1,*) (1,0,0,*) | (0,0,0,*) (0,0,1,*) (1,0,0,*) | (0,0,0,*) (0,0,1,*) (1,0,0,*) | (0,0,0,*) (1,0,0,*) (2,0,0,*) | (0,0,0,*) (1,0,0,*) (2,0,0,*) | (0,0,0,*) (1,0,0,*) (2,0,0,*) | (0,0,0,*) (0,0,1,*) (1,0,0,*) |
| 55 | (0,0,0,*) (0,0,1,*) (1,0,0,*) (1,0,1,*) | (0,0,0,*) (0,0,1,*) (1,0,0,*) (1,0,1,*) | (0,0,0,*) (0,0,1,*) (1,0,0,*) (1,0,1,*) | (0,0,0,*) (1,0,0,*) (2,0,0,*) (3,0,0,*) | (0,0,0,*) (1,0,0,*) (2,0,0,*) (3,0,0,*) | (0,0,0,*) (1,0,0,*) (2,0,0,*) (3,0,0,*) | (0,0,0,*) (0,0,1,*) (1,0,0,*) (1,0,1,*) |

(continued)

| PRACH Configuration Index | Uplink and downlink proportional configuration (See Table 1) | | | | | | |
|---|---|---|---|---|---|---|---|
| | 0 | 1 | 2 | 3 | 4 | 5 | 6 |
| 56 | (0,0,0,*) | (0,0,0,*) | (0,0,0,*) | (0,0,0,*) | (0,0,0,*) | (0,0,0,*) | (0,0,0,*) |
| | (0,0,1,*) | (0,0,1,*) | (0,0,1,*) | (1,0,0,*) | (1,0,0,*) | (1,0,0,*) | (0,0,1,*) |
| | (1,0,0,*) | (1,0,0,*) | (1,0,0,*) | (2,0,0,*) | (2,0,0,*) | (2,0,0,*) | (1,0,0,*) |
| | (1,0,1,*) | (1,0,1,*) | (1,0,1,*) | (3,0,0,*) | (3,0,0,*) | (3,0,0,*) | (1,0,1,*) |
| | (2,0,0,*) | (2,0,0,*) | (2,0,0,*) | (4,0,0,*) | (4,0,0,*) | (4,0,0,*) | (2,0,0,*) |
| 57 | (0,0,0,*) | (0,0,0,*) | (0,0,0,*) | (0,0,0,*) | (0,0,0,*) | (0,0,0,*) | (0,0,0,*) |
| | (0,0,1,*) | (0,0,1,*) | (0,0,1,*) | (1,0,0,*) | (1,0,0,*) | (1,0,0,*) | (0,0,1,*) |
| | (1,0,0,*) | (1,0,0,*) | (1,0,0,*) | (2,0,0,*) | (2,0,0,*) | (2,0,0,*) | (1,0,0,*) |
| | (1,0,1,*) | (1,0,1,*) | (1,0,1,*) | (3,0,0,*) | (3,0,0,*) | (3,0,0,*) | (1,0,1,*) |
| | (2,0,0,*) | (2,0,0,*) | (2,0,0,*) | (4,0,0,*) | (4,0,0,*) | (4,0,0,*) | (2,0,0,*) |
| | (2,0,1,*) | (2,0,1,*) | (2,0,1,*) | (5,0,0,*) | (5,0,0,*) | (5,0,0,*) | (2,0,1,*) |

From Table 5, it may be seen that when the resource of the time domain is not enough to configure PRACH channels through time division multiplexing, a plurality of PRACH channels will have a same time domain location. In this case, frequency division multiplexing will be adopted at this time domain location to map these PRACH channels. In an ordinary uplink subframe, the frequency domain mapping method for frequency-domain-multiplexing PRACH channels is to map from the two sides of the frequency band to its middle to ensure the PRACH channels have certain space in the frequency domain and possesses diversity gain. The mapping method is shown in Formula (1). For the random access channels in the UpPTS, the frequency-domain-multiplexing PRACH channels between two UpPTSs is mapped alternately in the upper and lower sidebands of the frequency band, while in each UpPTS, a plurality of the frequency-domain PRACH channels are continuously mapped to the lower sideband or upper sideband of the frequency band. The mapping method is shown in Formula (2).

$$n_{PRB}^{RA} = \begin{cases} n_{PRB\,offset}^{RA} + 6\left\lfloor \dfrac{f_{RA}}{2} \right\rfloor, & \text{if } f_{RA} \bmod 2 = 0 \\ N_{RB}^{UL} - 6 - n_{PRB\,offset}^{RA} - 6\left\lfloor \dfrac{f_{RA}}{2} \right\rfloor, & \text{otherwise} \end{cases} \qquad (1)$$

$$n_{PRB}^{RA} = \begin{cases} 6f_{RA}, & \text{if } \left((n_f \bmod 2) \times (2 - N_{SP}) + t_{RA}^1\right) \bmod 2 = 0 \\ N_{RB}^{UL} - 6(f_{RA} + 1), & \text{otherwise} \end{cases} \qquad (2)$$

Wherein, $n_{PRB\,offset}^{RA}$ is the initial frequency domain location of the PRACH channel; $N_{RB}^{UL}$ is the total number of RBs to which the configuration of uplink system bandwidth corresponds; $f_{RA}$ is the frequency domain index of the PRACH channels with a same time domain location; $\lfloor \, \rfloor$ denotes downward rounding. $n_f$ is a system frame number. $N_{SP}$ is the number of the downlink-to-uplink switch-points in a radio frame.

According to the embodiments of the present invention, firstly a method for allocating the dedicated random access resource is provided. It is applied in non-contention random access and used to allocate the dedicated random access preamble to the UE, and allocate the PRACH to which the dedicated random access preamble corresponds.

FIG. 4 is a flow chart of the method for allocating the dedicated random access resource according to the embodiment of the present invention. As shown in FIG. 4, the method for allocating the dedicated random access resource according to the embodiment of the present invention mainly includes the following steps:

step S401: the base station allocates the dedicated random access preamble to the UE, and allocates the predetermined PRACH to which the dedicated random access preamble corresponds in this radio frame; and

step S403: the base station transmits signaling to the UE, which includes the time domain information and the frequency domain information of the predetermined PRACH.

Below the foregoing steps are further described in details.

**(I) Step S401**

In the specific implementation process, in step S401, the base station may allocate the predetermined PRACH to which the dedicated random access preamble corresponds by five allocation methods. Before the five allocation methods are described, related concepts that the embodiment of the present invention involves will be introduced at first.
PRACH-time slot: a time window, L (L is a natural number above 0) continuous uplink subframes or an UpPTS that the PRACH (or called random access opportunity, or random access resource) occupies in the time domain. The L continuous uplink subframes constitute a PRACH-time slot, or this UpPTS is a PRACH-time slot.
In each PRACH-time slot, one or a plurality of PRACH channels may be multiplexed in frequency domain.
Supposing there are M foregoing PRACH-time slots in the radio frame. The M PRACH-time slots will be numbered according to the size of the time domain, as m = 0, 1, ..., M-1; in the M PRACH-time slots, there are N PRACH channels in total, N>=M.
The general policy for allocation of the predetermined PRACH channels (the dedicated random access resource) in the embodiment of the present invention is that: in a same PRACH-time slot, each UE is allocated at most one dedicated random access resource, i.e. in a same PRACH-time slot, the base station allocates the dedicated random access preamble of a certain UE in one frequency domain of the PRACH channel at most; in different PRACH-time slots, the frequency domain location of the dedicated random access resource allocated to a same UE may be different, i.e. the base station may allocate the dedicated random access preamble to a same UE on the PRACH channel of different frequency domain locations.
Below the five allocation methods are described separately.

**Allocation method 1**

In this allocation method, the dedicated random access preamble that the base station allocates to a certain UE is format 0, or 1, or 3, and the dedicated random access resource of this UE is reserved in $M'(1 < M' \leq M)$ continuous PRACH-time slots with the serial number m starting from 0. In other words, the base station acquires $M'$ continuous PRACH-time slots with serial number starting from 0 in the current radio frame, and regards a PRACH in each of the $M'$ PRACH-time slots as the PRACH to which the dedicated random access preamble corresponds.
Specifically, there may be the following two realization methods:

1) In the PRACH-time slot with serial number m=0, the base station regards the PRACH channel with frequency domain index=0 (i.e. the PRACH channel with $f_{RA}$=0 in this PRACH-time slot, also called the first PRACH channel in this PRACH-time slot) as the PRACH channel to which the dedicated random access preamble allocated to the UE corresponds, i.e. the dedicated random access preamble that the base station allocates to the UE corresponds to the first PRACH channel (i.e. the PRACH channel with $f_{RA}$=0 in this PRACH-time slot); in PRACH-time slot m (0 $< m \leq M'$), when the number of the frequency-domain-multiplexing PRACH channels is greater than 1 and the dedicated random access preamble of this UE in PRACH-time slot (m-1) corresponds to the first PRACH channel, the base station will regard the PRACH channel with frequency domain index=1 in PRACH-time slot m (i.e. the second PRACH channel of PRACH-time slot m) as the PRACH channel to which the dedicated random access preamble of this UE corresponds, i.e. the dedicated random access preamble the base station allocates to this UE corresponds to the second PRACH channel in PRACH-time slot m (i.e. the PRACH channel with $f_{RA}$ = 1 in this PRACH-time slot). Otherwise, the dedicated random access preamble that the base station allocates to this UE will still correspond to the first PRACH channel.

2) In the PRACH-time slot with serial number m=0, the base station regards the PRACH channel with frequency domain index=1 (i.e. the PRACH channel with $f_{RA}$=1 in this PRACH-time slot, also called the second PRACH channel in this PRACH-time slot) as the PRACH channel to which the dedicated random access preamble allocated to the UE corresponds, i.e. the dedicated random access preamble the base station allocates to the UE corresponds to the second PRACH channel (i.e. the PRACH channel with $f_{RA}$=0 in this PRACH-time slot); in PRACH-time slot m (0 $< m \leq M'$), when the number of the frequency-domain-multiplexing PRACH channels is greater than 1 and the dedicated random access preamble of this UE in PRACH-time slot (m-1) corresponds to the first PRACH channel, the base station will regard the PRACH channel with frequency domain index=1 in PRACH-time slot m (i.e. the second PRACH channel of PRACH-time slot m) as the PRACH channel to which the dedicated random access preamble of this UE corresponds, i.e. the dedicated random access preamble the base station allocates to this UE corresponds to the second PRACH channel of PRACH-time slot m (i.e. the PRACH channel with $f_{RA}$ = 1 in this PRACH-time slot). Otherwise, the dedicated random access preamble the base station allocates to this UE will still correspond to the first PRACH channel.

**Allocation method 2**

In this allocation method, the dedicated random access preamble that the base station allocates to a certain UE reserves the dedicated random access resource of this UE in all of the M (M>1) PRACH-time slots, i.e. the base station regards the PRACH with a same frequency domain index in each PRACH-time slot of the radio frame as the predetermined PRACH.

Specifically, the base station may regard the PRACH channels with frequency domain index=0 or 1 or 2 in each PRACH-time slot of the radio frame (i.e. the first, second or third PRACH channels) as the PRACH channels to which the dedicated random access preamble allocated to the UE corresponds. In other words, the dedicated random access preamble the base station allocates to the UE corresponds to the first PRACH channel of each PRACH-time slot (i.e. the PRACH with $f_{RA}$= 0), or the second PRACH channel of each PRACH-time slot (i.e. the PRACH with $f_{RA}$= 1), or the third PRACH channel of each PRACH-time slot.

**Allocation method 3**

In this allocation method, the dedicated random access preamble that the base station allocates to a certain UE is reserved only in one PRACH-time slot of the radio frame, i.e. the base station regards a PRACH in the radio frame as the PRACH channel to which the dedicated random access preamble allocated to this UE corresponds.

Specifically, the base station may number all PRACH channels in the radio frame according to a preset rule, and then select a PRACH channel with a corresponding serial number as the PRACH channel to which the dedicated random access preamble allocated to this UE corresponds.

In other words, the base station allocates the dedicated random access preamble allocated to the UE to the $n^{th}$ PRACH channel of N PRACH channels in the radio frame, wherein N is the total number of the PRACH channels in M PRACH-time slots. The N PRACH channels may be pre-numbered according to the preset rule.

Wherein, the foregoing N PRACH channels may be numbered according to the following rule: start from the frequency-domain-multiplexing PRACH channels in the first PRACH-time slot according to the rule of first frequency domain then time domain, and number the channels till the frequency-domain-multiplexing PRACH channels in the last PRACH-time slot. The numbering sequence of the frequency-domain-multiplexing PRACH in each PRACH-time slot is same as the frequency domain mapping sequence of the PRACH (i.e. according to the size of $f_{RA}$); or the PRACH channels are numbered from the lower sideband to the upper sideband of the frequency band according to their locations in the frequency domain (i.e. according to the size of $n_{PRB}^{RA}$). Alternatively, the N PRACH channels may be numbered according to the rule of first time domain then frequency domain.

**Allocation method 4**

In this allocation method, the base station numbers the PRACH-time slots in the radio frame and then selects the PRACH channel with a same frequency domain index $f_{RA}$ in odd or even PRACH-time slots as the PRACH channel to which the dedicated random access preamble allocated to the UE corresponds.

In other words, the base station allocates the dedicated random access preambles with format=0, 1 or 3 for the PRACH channels with a same frequency domain index $f_{RA}$ in all even PRACH-time slots to a certain UE; alternatively, the base station allocates the dedicated random access preambles with format=0, 1 or 3 for the PRACH channels with a same frequency domain index $f_{RA}$ in all odd PRACH-time slots to a certain UE.

**Allocation method 5**

In this allocation method, the base station numbers the PRACH channels in the radio frame at first. Specifically, the PRACH in the frequency domain of each PRACH-time slot in this radio frame may be numbered according to its mapping sequence in the frequency domain (i.e. according to the size of $f_{RA}$); alternatively the PRACH in the frequency domain of each PRACH-time slot may also be numbered according to its absolute location in the frequency domain; and

then, the base station selects a PRACH channel in a specific PRACH frequency band of the first PRACH-time slot as an initial PRACH channel, and then repeats the following operation in the radio frame: proceed from the just selected PRACH channel, and select the PRACH channel with the next serial number if the next PRACH-time slot exists and the PRACH channel with the next serial number exists in the frequency domain of this PRACH-time slot; otherwise select the PRACH channel of the first frequency band (i.e. frequency domain index is 0) in this PRACH-time slot. All the selected PRACH channels form a set. This set is called PRACH resource combination. The dedicated random access preamble that the base station allocates to a certain UE may correspond to all PRACH channels included into a resource combination, i.e. the base station regards all PRACH channels included into this resource combination as the PRACH channels (i.e. the foregoing predetermined PRACH channels) to which the dedicated random access preamble allocated to the UE corresponds.

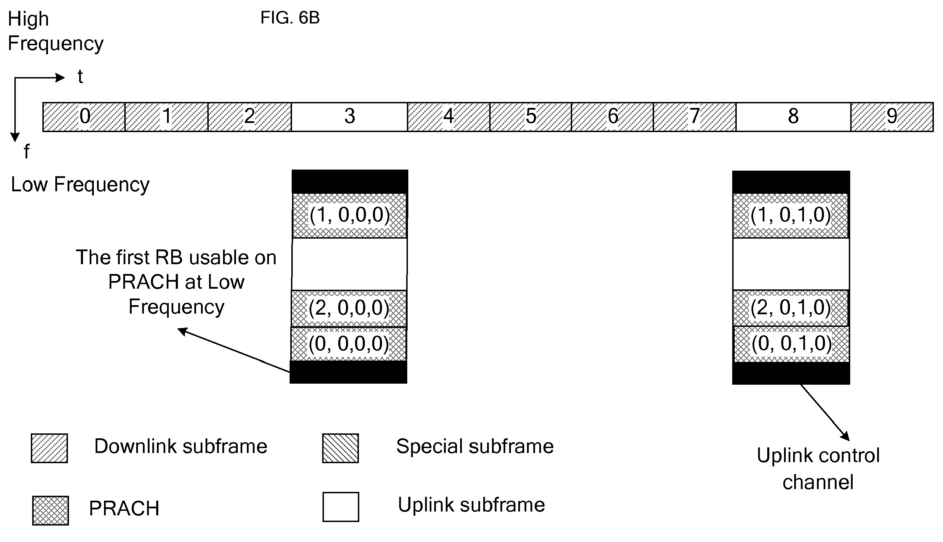

For example, if the current locations of the time-frequency domain of PRACH channels are (0,0,0,0), (1,0,0,0), (2,0,0,0), (0,0,1,0), (1,0,1,0) and (2,0,1,0) as shown in FIG. 6B, there are 2 PRACH-time slots in total, i.e. M=2, and each PRACH-time slot has 3 PRACH channels and the mapping sequence of PRACH channels in the frequency domain is adopted, i.e. the sequence of PRACH frequency band $f_{RA}$ is {0,1,2,3,4,5}. If the location of the selected initial PRACH channel is (0,0,0,0) and the frequency band $f_{RA}$ =0, then the PRACH at location (1,0,1,0) will correspond to the next PRACH-time slot and $f_{RA}$=1, so the selection condition is met and a PRACH resource combination is obtained, i.e. PRACH(0,0,0,0) and PRACH(1,0,1,0).

For the same reason, there are two other combinations: PRACH(2,0,0,0), PRACH(0,0,1,0); and PRACH(1,0,0,0), PRACH(2,0,1,0).

The base station provided by the embodiment of the present invention may provide different allocation methods for different UEs, so the flexibility of the allocation of dedicated random access resource may be enhanced.

**(II) Step S403**

In a specific implementation process, step S403 may be realized by the following method:

1) The base station and the UE prearrange the correspondence between the dedicated random access resource allocation index and the dedicated random access resource; the details may be as shown in Tables 6, 7 and 8 below.

2) The base station acquires the dedicated random access resource allocation index corresponding to the PRACH channel (i.e. the dedicated random access resource) to which the current dedicated random access preamble allocated to the UE corresponds.

3) The base station transmits signaling to this UE; the signaling includes the dedicated random access resource allocation index acquired above.

After receiving the foregoing signaling, the UE may acquire the dedicated random access resource allocation index from the signaling, and then acquires the dedicated random access resource to which the dedicated random access resource allocation index corresponds according to the prearranged correspondence between the dedicated random access resource allocation index and the dedicated random access resource, and initiates a non-contention based random access in this dedicated random access resource.

According to the foregoing method provided by the embodiment of the present invention, different random access resources may be provided for different UEs, and a same dedicated random access preamble may be allocated to different UEs in the same time through allocating different PRACH channels to the dedicated random access preambles allocated to different UEs.

To further illustrate the foregoing method provided by the embodiment of the present invention, the specific realization of the random access by using the technical solution provided by the embodiment of the present invention in the LTE TDD system will be described below.

Non-contention based random access procedure is mainly used for the realization of handover and for the arrival of downlink data when the uplink of the UE is out of synchronism:

handover: the target cell generates a handover command; through the handover command transmitted from the source base station, the UE acquires the dedicated random access preamble information used in the target cell; and

the downlink data have arrived, but the UE is in out-of-synchronism state: through PDCCH, the UE acquires the allocated dedicated random access preamble.

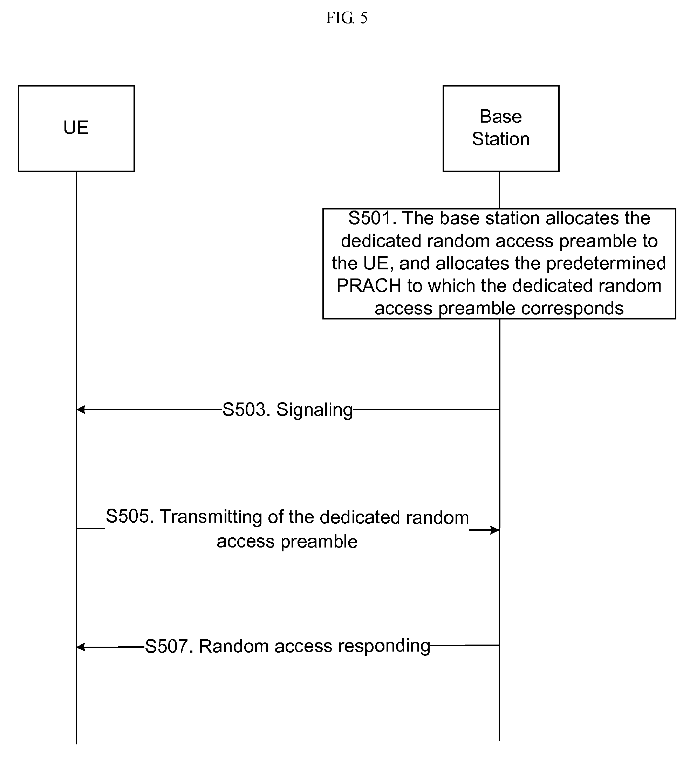

The non-contention based random access flow is shown in FIG. 5 and mainly includes the following steps:

step S501: the base station allocates the dedicated random access preamble to the UE, and allocates the PRACH channel to which the dedicated random access preamble corresponds;

step S503: the base station transmits signaling to the UE; the signaling includes the allocated dedicated random access preamble and allocation information; the allocation information is intended to indicate one or a plurality of specific PRACH channels in the radio frame, to which the dedicated random access preamble that the UE acquires corresponds;

step S505: the UE transmits the dedicated random access preamble over an uplink PRACH channel; and

step S507: the UE receives the random access response message from the base station on a downlink shared channel.

For easy description, quaternion $(f_{RA}, t_{RA}^0, t_{RA}^1, t_{RA}^2)$ is used to express a specific PRACH in the LTE TDD system. $f_{RA}$ stands for the frequency-domain-multiplexing PRACH index (the first PRACH channel corresponds to $f_{RA}$ =0) in each PRACH-time slot, and $t_{RA}^0$ = 0,1,2 is the radio frame where the PRACH-time slot locates, 0 stands for each of all radio frames, 1 stands for even radio frames and 2 stands for odd radio frames; $t_{RA}^1 = 0,1$ stands for the half frame where the PRACH-time slot locates, wherein 0 stands for the first half frame and 1 stands for the second half frame; $t_{RA}^2$ indicates PRACH-time slot is UpPTS when it is (*); other values of $t_{RA}^2$ indicate that which uplink subframe in a half frame is the first subframe occupied by the PRACH-time slot.

**Embodiment 1**

This embodiment describes non-contention random access of the UE by taking handover for example. While the UE acquires the dedicated random access preamble from a handover command, i.e. RRC Connection Reconfiguration message, it may also acquire the allocation information from the handover command. This allocation message is used to indicate which PRACH channel or which PRACH channels in the radio frame the dedicated random access preamble acquired by the UE corresponds to. This allocation message indicates one of many types of predetermined dedicated random access resource allocation. In specific implementation process, this allocation information may use 4-bit codes to indicate 16 types of resource allocation in the LTE TDD system, wherein, each code point is a dedicated random access resource allocation index, and corresponds to one or one group of the PRACH channels that may be used by the UE to transmit the dedicated random access preamble acquired by the UE. Table 6 provides a typical application of the method for allocating dedicated random access resource in the embodiment of the present invention. The 4-bit allocation index information provides 15 types of dedicated random access resource mapping (i.e. the correspondence between the foregoing dedicated random access resource allocation index and the dedicated random access resource). In Table 6, three allocation methods provided by the embodiment of the present invention are applied, namely: the foregoing allocation method 1, allocation method 2 and allocation method 3. Through this 4-bit allocation index information, the base station may flexibly allocate the respective dedicated access resource of the UE.
Further, the UE may also acquire the information about the random access configuration of the target cell and the information about uplink and downlink proportional configuration from the handover command in the same time, thereby the UE may acquire the time-frequency domain locations of PRACH channel of a target cell, so as to accurately determine the dedicated random access resource allocated to the UE.

Table 6 Dedicated random resource allocation table of the LTE TDD

| Dedicated random access resource allocation index (RA-Resource Index) | Mapping of dedicated random access resource (PRACH resource) |
| --- | --- |
| 0000 | the pre-numbered first PPACH channel in the radio frame (allocation method 3) |
| 0001 | the pre-numbered second PPACH channel in the radio frame (allocation method 3) |
| 0010 | the pre-numbered third PPACH channel in the radio frame (allocation method 3) |

(continued)

| Dedicated random access resource allocation index (RA-Resource Index) | Mapping of dedicated random access resource (PRACH resource) |
|---|---|
| 0011 | the pre-numbered fourth PPACH channel in the radio frame (allocation method 3) |
| 0100 | the pre-numbered fifth PPACH channel in the radio frame (allocation method 3) |
| 0101 | the pre-numbered sixth PPACH channel in the radio frame (allocation method 3) |
| 0110 | the PRACH channel with $f_{RA} = 0$ in frequency domain of "PRACH-time slot" 0 and the PRACH channel with $f_{RA} = 1$ in the frequency domain of "PRACH-time slot" 1 (allocation method 1, $M' = 2$) |
| 0111 | The PRACH channel with $f_{RA} = 1$ in the frequency domain of "PRACH-time slot" 0 and the PRACH channel with $f_{RA} = 0$ in the frequency domain of "PRACH-time slot" 1 (allocation method 1, $M' = 2$) |
| 1000 | The PRACH channel with $f_{RA} = 0$ in the frequency domain of "PRACH-time slot" 0, the PRACH channel with $f_{RA} = 1$ in the frequency domain of "PRACH-time slot" 1 and the PRACH channel with $f_{RA} = 0$ in the frequency domain of "PRACH-time slot" 2 (allocation method 1, $M' = 3$) |
| 1001 | The PRACH channel with $f_{RA} = 1$ in the frequency domain of "PRACH-time slot" 0, the PRACH channel with $f_{RA} = 0$ in the frequency domain of "PRACH-time slot" 1 and the PRACH channel with $f_{RA} = 1$ in the frequency domain of "PRACH-time slot" 2 |
|  | (allocation method 1, $M' = 3$) |
| 1010 | The PRACH channel with $f_{RA} = 1$ in the frequency domain of "PRACH-time slot" 0, the PRACH channel with $f_{RA} = 0$ in the frequency domain of "PRACH-time slot" 1, the PRACH channel with $f_{RA} = 1$ in the frequency domain of "PRACH-time slot" 2 and the PRACH channel with $f_{RA} = 0$ in the frequency domain of "PRACH-time slot" 3 (allocation method 1 of the present invention, $M' = 4$) |
| 1011 | The PRACH channel with $f_{RA} = 0$ in the frequency domain of "PRACH-time slot" 0, the PRACH channel with $f_{RA} = 1$ in the frequency domain of "PRACH-time slot" 1, the PRACH channel with $f_{RA} = 0$ in the frequency domain of "PRACH-time slot" 2 and the PRACH channel with $f_{RA} = 1$ in the frequency domain of "PRACH-time slot" 3 (allocation method 1, $M' = 4$) |
| 1100 | The PRACH channels with $f_{RA} = 0$ in the frequency domain of all "PRACH-time slots" (allocation method 2) |
| 1101 | The PRACH channels with $f_{RA} = 1$ in the frequency domain of all "PRACH-time slots" (allocation method 2) |
| 1110 | The PRACH channels with $f_{RA} = 2$ in the frequency domain of all "PRACH-time slots" (allocation method 2) |
| 1111 | Reserved extension bit |

The application of Table 6 in the LTE TDD system is described with specific examples:

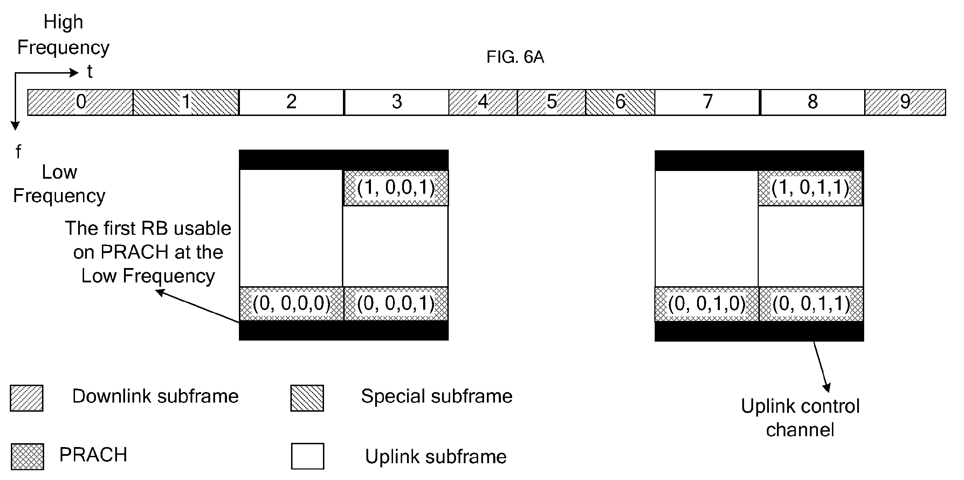

If the PRACH configuration index of the target cell that the UE acquires through a handover command is 18 (See Table 4) and the uplink and downlink proportional configuration is 1, then the UE will acquire the locations of the time domain and the frequency domain of the PRACH are (0,0,0,1), (0,0,1,1), (0,0,0,0), (0,0,1,0), (1,0,0,1) and (1,0,1,1). As shown in FIG. 6A, there are 4 PRACH-time slots in total, i.e. M=4. In these 4 PRACH-time slots, there are 6 PRACH channels in total, i.e. N=6; when the allocation message the UE acquires from the handover command indicates the dedicated random access resource allocation index is 1011, the UE may acquire the dedicated random access preamble that the base station allocates to it corresponds to the following 4 PRACH channels, and the UE may initiate a non-contention based random access on these 4 PRACH channels:

the first PRACH channel of subframe 2 (corresponding to $f_{RA}$=0, i.e. (0,0,0,0));

the second PRACH channel of subframe 3 (corresponding to $f_{RA}$=1, i.e. (1,0,0,1));

the first PRACH channel of subframe 7 (corresponding to $f_{RA}$=0, i.e. (0,0,1,0)); and

the second PRACH channel of subframe 8 (corresponding to $f_{RA}$=1, i.e. (1,0,1,1)).

If the PRACH configuration index of the target cell that the UE acquires through a handover command is 18 (See Table 4) and the uplink and downlink proportional configuration is 2, then the UE will acquire the locations of the time domain and the frequency domain of the PRACH are (0,0,0,0), (1,0,0,0), (2,0,0,0), (0,0,1,0), (1,0,1,0) and (2,0,1,0). As shown in FIG. 6B, there are 2 PRACH-time slots in total, i.e. M=2. In these 2 PRACH-time slots, there are 6 PRACH channels in total, i.e. N=6; when the allocation message the UE acquires from the handover command indicates the dedicated random access resource allocation index is 0110, the UE may acquire the dedicated random access preamble that the base station allocates to it corresponds to the following 2 PRACH channels, and the UE may initiate a non-contention based random access over these 2 PRACH channels:

the first PRACH channel of subframe 3 (corresponding to $f_{RA}$=0, i.e. (0,0,0,0)); and

the second PRACH channel of subframe 8 (corresponding to $f_{RA}$ =1, i.e. (1,0,1,0)).

When the allocation message the UE acquires from the handover command indicates the dedicated random access resource allocation index is 0111, the UE may acquire the dedicated random access preamble that the base station allocates to it corresponds to the following 2 PRACH channels, and the UE may initiate a non-contention based random access over these 2 PRACH channels:

the second PRACH channel of subframe 3 (corresponding to $f_{RA}$ =1, i.e. (1,0,0,0)); and

the first PRACH channel of subframe 8 (corresponding to $f_{RA}$=0, i.e. (0,0,1,0)).

When the allocation message the UE acquires from the handover command indicates the dedicated random access resource allocation index is 1110, the UE may acquire the dedicated random access preamble that the base station allocates to it corresponds to the following 2 PRACH channels, and the UE may initiate a non-contention based random access over these 2 PRACH channels:

the third PRACH channel of subframe 3 (corresponding to $f_{RA}$=2, i.e. (2,0,0,0)); and

the third PRACH channel of subframe 8 (corresponding to $f_{RA}$=2, i.e. (2,0,1,0)).

In addition to Table 6, there are also two typical applications containing the method for allocating dedicated random access resource provided by the embodiment of the present invention, as shown in Table 7 and Table 8; what is different from Table 6, Table 7 adds the foregoing allocation method 4 and deletes two types of resource mapping that apply allocation method 1, while Table 8 adds the resource mapping of the foregoing allocation method 5.

Table 7 Dedicated random resource allocation table of the LTE TDD

| RA-Resource Index | Mapping of dedicated random access resource (PRACH resource) |
|---|---|
| 0000 | The pre-numbered first PPACH channel in the radio frame (allocation method 3) |
| 0001 | The pre-numbered second PPACH channel in the radio frame (allocation method 3) |
| 0010 | The pre-numbered third PPACH channel in the radio frame (allocation method 3) |
| 0011 | The pre-numbered fourth PPACH channel in the radio frame (allocation method 3) |
| 0100 | The pre-numbered fifth PPACH channel in the radio frame (allocation method 3) |
| 0101 | The pre-numbered sixth PPACH channel in the radio frame (allocation method 3) |

(continued)

| RA-Resource Index | Mapping of dedicated random access resource (PRACH resource) |
|---|---|
| 0110 | The PRACH channel with $f_{RA}$ = 0 in the frequency domain of "PRACH-time slot" 0 and the PRACH channel with $f_{RA}$=1 in the frequency domain of "PRACH-time slot" 1 (allocation method 1, $M'$ =2) |
| 0111 | The PRACH channel with $f_{RA}$ =1 in the frequency domain of "PRACH-time slot" 0 and the PRACH channel with $f_{RA}$ = 0 in the frequency domain of "PRACH-time slot" 1 (allocation method 1, $M'$ = 2) |
| 1000 | The PRACH channel with $f_{RA}$ = 0 in the frequency domain of "PRACH-time slot" 0, the PRACH channel with $f_{RA}$ =1 in the frequency domain of "PRACH-time slot" 1 and the PRACH channel with $f_{RA}$ = 0 in the frequency domain of "PRACH-time slot" 2 (allocation method 1, $M'$ = 3) |
| 1001 | The PRACH channel with $f_{RA}$ = 1 in the frequency domain of "PRACH-time slot" 0, the PRACH channel with $f_{RA}$ = 0 in the frequency domain of "PRACH-time slot" 1 and the PRACH channel with $f_{RA}$ =1 in the frequency domain of "PRACH-time slot" 2 (allocation method 1, $M'$ = 3) |
| 1010 | The PRACH channels with $f_{RA}$ = 0 in the frequency domain of all even "PRACH-time slots"(allocation method 4) |
| 1011 | The PRACH channels with $f_{RA}$ = 0 in the frequency domain of all odd "PRACH-time slots"(allocation method 4) |
| 1100 | The PRACH channels with $f_{RA}$ = 0 in the frequency domain of all "PRACH-time slots"(allocation method 2) |
| 1101 | The PRACH channel with $f_{RA}$ = in the frequency domain of all "PRACH-time slots"(allocation method 2) |
| 1110 | The PRACH channel with $f_{RA}$ = 2 in the frequency domain of all "PRACH-time slots"(allocation method 2) |
| 1111 | Reserved extension bit |

Table 8 Dedicated random resource allocation table of the LTE TDD

| RA-Resource Index | Mapping of dedicated random access resource (PRACH resource) |
|---|---|
| 0000 | The pre-numbered first PPACH channel in the radio frame (allocation method 3) |
| 0001 | The pre-numbered second PPACH channel in the radio frame (allocation method 3) |
| 0010 | The pre-numbered third PPACH channel in the radio frame (allocation method 3) |
| 0011 | The pre-numbered fourth PPACH channel in the radio frame (allocation method 3) |
| 0100 | The pre-numbered fifth PRACH channel in the radio frame (allocation method 3) |
| 0101 | The pre-numbered sixth PPACH channel in the radio frame (allocation method 3) |
| 0110 | The PRACH channels with $f_{RA}$ = 0 in the frequency domain of all "PRACH-time slots"(allocation method 2) |
| 0111 | The PRACH channel with $f_{RA}$ = 1 in the frequency domain of all "PRACH-time slots" (allocation method 2) |
| 1000 | The PRACH channel with $f_{RA}$ = 2 in the frequency domain of all "PRACH-time slots"(allocation method 2) |
| 1001 | The initial PRACH channel with $f_{RA}$ = 0 (allocation method 5) |
| 1010 | The initial PRACH channel with $f_{RA}$ = 1 (allocation method 5) |
| 1011 | The initial PRACH channel with $f_{RA}$ = 2 (allocation method 5) |
| 1100 | The PRACH channels with $f_{RA}$ = 0 in all even "PRACH-time slots" (allocation method 4) |

(continued)

| RA-Resource Index | Mapping of dedicated random access resource (PRACH resource) |
|---|---|
| 1101 | The PRACH channels with $f_{RA}$ = 0 in all odd "PRACH-time slots"(allocation method 4) |
| 1110 | The PRACH channels with $f_{RA}$ = 1 in all even "PRACH-time slots" (allocation method 4) |
| 1111 | The PRACH channels with $f_{RA}$ =1 in all odd "PRACH-time slots"(allocation method 4) |

**Embodiment 2**

When downlink data have arrived, but the UE is in uplink out-of-synchronism state, the UE will acquire the dedicated random access preamble from PDCCH and meanwhile will acquire allocation information from the downlink signaling to determine which PRACH channel or which PRACH channels in the radio frame the dedicated random access preamble the UE acquires corresponds to. This allocation message indicates one of many types of predetermined dedicated random access resource allocation. When system bandwidth is large and the number of the configured PRACH channels is large, the resource allocation Table 6 or Table 7 for the purpose of handover in Embodiment 1 may be adopted, and 4-bit codes are used to inform the UE one type of resource mapping in the table; when system bandwidth is small, 2-bit codes may be adopted to indicate 4 types of resource allocation, which may be a subset of Table 6 or Table 7.

The specific implementation process is similar to Embodiment 1 and is not described here.

According to the embodiment of the present invention, a base station is also provided. This base station may realize the foregoing method for allocating dedicated random access resource.

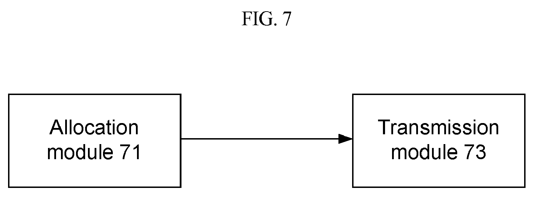

FIG. 7 is a block diagram illustrating the structure of a base station according to the embodiment of the present invention. As shown in FIG. 7, the base station according to the embodiment of the present invention mainly comprises: an allocation module 71 and a transmission module 73 connected to the allocation module 71. The allocation module 71 is used to allocate the dedicated random access preamble to the UE, and allocate the PRACH to which the dedicated random access preamble corresponds; the transmission module 73 is connected to the allocation module 71, and used to transmit signaling to the UE, wherein, the signaling includes the time domain information and the frequency domain information of the PRACH channel allocated above.

As the PRACH to which the dedicated random access preamble corresponds has five allocation methods in specific implementation process, the corresponding allocation module 71 may comprise 5 sub-modules, which are intended to allocate the PRACH to which the dedicated random access preamble corresponds by the foregoing five allocation methods, respectively.

Further, in actual application, the allocated PRACH may be expressed with the dedicated random access resource allocation table according to the prearranged correspondence between dedicated random access resource allocation index and dedicated random access resource. Therefore, the transmission module 73 only needs to transmit the random access resource allocation index to which the allocated PRACH corresponds to the UE. The UE may acquire from this index which PRACH channel or which PRACH channels are allocated.

Through the foregoing base station provided by the embodiment of the present invention, PRACH channels can be flexibly allocated to the UE.

As described above, with the help of the technical solution provided by the embodiment of the present invention, the dedicated random access resource allocated to a certain UE may be configured flexibly, and through transmitting the location of the PRACH to which the allocated dedicated random access preamble corresponds to the UE, different UEs may use a same dedicated random access preamble on different PRACH channels, thereby increasing the chance of using non-contention based random access procedure and raising the utilization efficiency of the dedicated random access preamble; moreover, when the base station allocates the dedicated random access preamble to the UE, the dedicated random access preamble allocated through dedicated signaling configuration may be transmitted over a plurality of PRACH channels in the time domain of the radio frame, so that after random access is failed, random access can be initiated soon, thereby shortening delay.

**Claims**

**1.** A method for allocating the dedicated random access resource, the method including the steps of:

allocating, by a base station, a dedicated random access preamble to a UE, and allocating, by the base station, a predetermined PRACH to which the dedicated random access preamble corresponds in a radio frame;

acquiring, by the base station, a dedicated random access resource allocation index to which the allocated predetermined PRACH corresponds according to a prearranged correspondence between the dedicated random access resource allocation index and the dedicated random access resource, wherein the prearranged correspondence is prearranged by the base station and the UE; and

transmitting, by the base station, a signaling that includes the acquired dedicated random access resource allocation index, to the UE, wherein the signaling includes time domain information and frequency domain information of the predetermined PRACH.

2. The method of claim 1, wherein the allocating, by the base station, the PRACH to which the dedicated random access preamble corresponds, includes:

step 1, acquiring, by the base station, M' continuous PRACH-time slots each having a serial number m in the radio frame, wherein m is 0, 1, ..., M'-1 respectively; and

step 2, selecting, by the base station, a PRACH in the frequency domain of each of the M' PRACH-time slots as the predetermined PRACH, wherein,

the PRACH-time slots are L continuous uplink subframes that the PRACH occupies in the time domain, L is a natural number and $L \geq 1$; or the PRACH-time slot is an uplink pilot time slot that the PRACH occupies in the time domain; and M' is a natural number and $1 < M' \leq M$, and M is the total number of PRACH-time slots in the radio frame; the PRACH-time slots in the radio frame are numbered in advanced by starting from 0 according to a sequence of time domains.

3. The method of claim 2, wherein the step 2 specifically includes:

in the PRACH-time slot with serial number m=0, selecting, by the base station, a PRACH with frequency domain index=0 as the predetermined PRACH; and

in the PRACH-time slot with serial number $0 < m \leq M'$, selecting, by the base station, a PRACH with frequency domain index=1 in the $m^{th}$ PRACH-time slot as the predetermined PRACH when a predetermined condition is met, otherwise selecting a PRACH with frequency domain index=0 in the $m^{th}$ PRACH-time slot as the predetermined PRACH; wherein, the predetermined condition is that the number of the current frequency-domain-multiplexing PRACH channels is greater than 1, and selecting, by the base station, a PRACH with frequency domain index=0 in the $(m-1)^{th}$ PRACH-time slot as the predetermined PRACH.

4. The method of claim 2, wherein the step 2 specifically includes:

in the PRACH-time slot with serial number m=0, selecting, by the base station, a PRACH with frequency domain index=1 as the predetermined PRACH; and

in the PRACH-time slot with serial number $0 < m \leq M'$, selecting, by the base station, a PRACH with frequency domain index=1 in the $m^{th}$ PRACH-time slot as the predetermined PRACH when a predetermined condition is met, otherwise selecting a PRACH with frequency domain index=0 in the $m^{th}$ PRACH-time slot as the predetermined PRACH; wherein, the predetermined condition is that the number of the current frequency-domain-multiplexing PRACH channels is greater than 1, and selecting, by the base station, a PRACH with frequency domain index=0 in the $(m-1)^{th}$ PRACH-time slot as the predetermined PRACH.

5. The method of claim 1, wherein the allocating, by the base station, the predetermined PRACH to which the dedicated random access preamble corresponds, includes

selecting, by the base station, a PRACH with a same frequency domain index in each PRACH-time slot in the radio frame as the predetermined PRACH, wherein, the PRACH-time slot includes L continuous uplink subframes that the PRACH occupies in the time domain, L is a natural number and L#1; or the PRACH-time slot is an uplink pilot time slot that the PRACH occupies in the time domain.

6. The method of claim 1, wherein the allocating, by the base station, the PRACH to which the dedicated random access preamble corresponds to the UE, includes:

selecting, by the base station, one PRACH in the radio frame as the predetermined PRACH.

7. The method of claim 6, wherein the selecting, by the base station, one PRACH in the radio frame as the predetermined PRACH includes:

> numbering, by the base station, all PRACH channels in the radio frame according to a preset rule; and
> selecting, by the base station, a PRACH with a serial number as the predetermined PRACH.

**8.** The method of claim 7, wherein the preset rule specifically is:

> starting from the frequency-domain-multiplexing PRACH in the first PRACH-time slot according to the rule of first frequency domain then time domain, and numbering all frequency-domain-multiplexing PRACH channels in this time slot according to the mapping sequence of the PRACH channels in the frequency domain or according to the locations of the PRACH channels in the frequency domain, from the lower sideband to the upper sideband of the frequency band till the frequency-domain-multiplexing PRACH in the last PRACH-time slot; or
> starting from the PRACH with the smallest frequency domain mapping index according to the rule of first time domain then frequency domain, and numbering the PRACH channels with a same frequency domain index according to the time sequence relation of PRACH-time slots till the PRACH with the largest frequency domain mapping index.

**9.** The method of claim 1, wherein the allocating, by the base station, the predetermined PRACH to which the dedicated random access preamble corresponds, includes:

> numbering, by the base station, PRACH-time slots in the radio frame; and
> selecting, by the base station, PRACH with a same frequency domain index in the odd or even PRACH-time slots as the predetermined PRACH.

**10.** The method of claim 1, wherein the allocating, by the base station, the predetermined PRACH to which the dedicated random access preamble corresponds, includes:

> numbering PRACH channels in the frequency domain of each PRACH-time slot in the radio frame according to their mapping sequence in the frequency domain, or according to their absolute locations in the frequency domain; and
> selecting a PRACH in the first PRACH-time slot in the radio frame as an initial PRACH; wherein, the following operation is repeated in the radio frame: proceeding from the just selected PRACH, and selecting the PRACH with a next serial number if the next PRACH-time slot exists and the PRACH with the next serial number exists in the frequency domain of this PRACH-time slot; otherwise the PRACH with frequency domain index=0 in this PRACH-time slot will be selected.

**11.** The method of claim 1, further comprising the step, performed after the base station transmits the signaling which includes the acquired dedicated random access resource allocation index to the UE, of:

> acquiring, by the UE, the dedicated random access resource allocation index from the signaling; and
> acquiring, by the UE, the dedicated random access resource to which the dedicated random access resource allocation index corresponds according to the correspondence between dedicated random access resource allocation index and dedicated random access resource, which is prearranged with the base station, and initiating a non-contention based random access in this dedicated random access resource.

**12.** A base station, comprising:

> an allocation module (71) configured to allocate a dedicated random access preamble to a UE, and to allocate a predetermined PRACH to which the dedicated random access preamble corresponds; and
> a transmission module (73) connected with the allocation module (71) and configured to:

>> acquire a dedicated random access resource allocation index to which the allocated predetermined PRACH corresponds according to a prearranged correspondence between the dedicated random access resource allocation index and a dedicated random access resource, wherein the prearranged correspondence is prearranged by the base station and the UE; and
>> transmit a signaling that includes the acquired dedicated random access resource allocation index to the UE, wherein the signaling includes time domain information and frequency domain information of the predetermined PRACH.

**Patentansprüche**

1. Verfahren zum Zuordnen der dedizierten Direktzugriffsressource, wobei das Verfahren die folgenden Schritte umfasst:

   Zuordnen eines dedizierten Direktzugriffskopfs zu einem UE durch eine Basisstation und Zuordnen eines vorgegebenen PRACH, welchem der dedizierte Direktzugriffskopf in einem Funkrahmen entspricht, durch die Basisstation;
   Erwerben eines Zuordnungsindex für eine dedizierte Direktzugriffsressource, welchem der zugeordnete vorgegebene PRACH entspricht, durch die Basisstation gemäß einer vorab eingerichteten Entsprechung zwischen dem Zuordnungsindex für eine dedizierte Direktzugriffsressource und der dedizierten Direktzugriffsressource, wobei die vorab eingerichtete Entsprechung vorab durch die Basisstation und das UE eingerichtet wird; und
   Senden einer Signalisierung, welche den erworbenen Zuordnungsindex für eine dedizierte Direktzugriffsressource umfasst, durch die Basisstation an das UE, wobei die Signalisierung Zeitdomäneninformationen und Frequenzdomäneninformationen des vorgegebenen PRACH umfasst.

2. Verfahren nach Anspruch 1, wobei das Zuordnen des PRACH, welchem der dedizierte Direktzugriffskopf entspricht, durch die Basisstation umfasst:

   Schritt 1, Erwerben von M' kontinuierlichen PRACH-Zeitschlitzen durch die Basisstation, welche jeweils eine Seriennummer m in dem Funkrahmen aufweisen, wobei m 0, 1, ..., M'-1 ist; und
   Schritt 2, Auswählen eines PRACH in der Frequenzdomäne jedes der M'PRACH-Zeitschlitze als der vorgegebene PRACH durch die Basisstation, wobei
   es sich bei den PRACH-Zeitschlitzen um L kontinuierliche Unterrahmen der Aufwärtsstrecke handelt, welche der PRACH in der Zeitdomäne belegt, L eine natürliche Zahl ist und L ≥ 1; oder der PRACH-Zeitschlitz ein Pilot-Zeitschlitz der Aufwärtsstrecke ist, welchen der PRACH in der Zeitdomäne belegt; und
   M' eine natürliche Zahl ist und 1 < M' ≤ M und M die Gesamtzahl der PRACH-Zeitschlitze in dem Funkrahmen ist; die PRACH-Zeitschlitze in dem Funkrahmen vorab gemäß einer Folge von Zeitdomänen nummeriert sind, beginnend bei 0.

3. Verfahren nach Anspruch 2, wobei der Schritt 2 speziell umfasst:

   in dem PRACH-Zeitschlitz mit der Seriennummer m = 0 Auswählen eines PRACH mit Frequenzdomänenindex = 0 als der vorgegebene PRACH durch die Basisstation und
   in dem PRACH-Zeitschlitz mit der Seriennummer 0 < m ≤ M' Auswählen eines PRACH mit Frequenzdomänenindex = 1 in dem m-ten PRACH-Zeitschlitz als der vorgegebene PRACH durch die Basisstation, wenn eine vorgegebene Bedingung erfüllt ist, anderenfalls Auswählen eines PRACH mit Frequenzdomänenindex = 0 in dem m-ten PRACH-Zeitschlitz als der vorgegebene PRACH; wobei die vorgegebene Bedingung ist, dass die Anzahl der aktuellen Frequenzmultiplex-PRACH-Kanäle höher als 1 ist, und Auswählen eines PRACH mit Frequenzdomänenindex = 0 in dem (m-1)-ten PRACH-Zeitschlitz als der vorgegebene PRACH durch die Basisstation.

4. Verfahren nach Anspruch 2, wobei der Schritt 2 speziell umfasst:

   in dem PRACH-Zeitschlitz mit der Seriennummer m = 0 Auswählen eines PRACH mit Frequenzdomänenindex = 1 als der vorgegebene PRACH durch die Basisstation und
   in dem PRACH-Zeitschlitz mit der Seriennummer 0 < m ≤ M' Auswählen eines PRACH mit Frequenzdomänenindex = 1 in dem m-ten PRACH-Zeitschlitz als der vorgegebene PRACH durch die Basisstation, wenn eine vorgegebene Bedingung erfüllt ist, anderenfalls Auswählen eines PRACH mit Frequenzdomänenindex = 0 in dem m-ten PRACH-Zeitschlitz als der vorgegebene PRACH; wobei die vorgegebene Bedingung ist, dass die Anzahl der aktuellen Frequenzmultiplex-PRACH-Kanäle höher als 1 ist, und Auswählen eines PRACH mit Frequenzdomänenindex = 0 in dem (m-1)-ten PRACH-Zeitschlitz als der vorgegebene PRACH durch die Basisstation.

5. Verfahren nach Anspruch 1, wobei das Zuordnen des vorgegebenen PRACH, welchem der dedizierte Direktzugriffskopf entspricht, durch die Basisstation umfasst:

   Auswählen eines PRACH mit einem gleichen Frequenzdomänenindex in jedem PRACH-Zeitschlitz in dem Funkrahmen als der vorgegebene PRACH durch die Basisstation, wobei der PRACH-Zeitschlitz L kontinuierliche Unterrahmen der Aufwärtsstrecke umfasst, welche der PRACH in der Zeitdomäne belegt, L eine natürliche Zahl ist und L ≠ 1; oder der PRACH-Zeitschlitz ein Pilot-Zeitschlitz der Aufwärtsstrecke ist, welchen der PRACH in der Zeitdomäne belegt.

6. Verfahren nach Anspruch 1, wobei das Zuordnen des PRACH, welchem der dedizierte Direktzugriffskopf entspricht, zu dem UE durch die Basisstation umfasst:

   Auswählen eines PRACH in dem Funkrahmen als der vorgegebene PRACH durch die Basisstation.

7. Verfahren nach Anspruch 6, wobei das Auswählen eines PRACH in dem Funkrahmen als der vorgegebene PRACH durch die Basisstation umfasst:

   Nummerieren aller PRACH-Kanäle in dem Funkrahmen durch die Basisstation gemäß einer vorgegebenen Regel und
   Auswählen eines PRACH mit einer Seriennummer als der vorgegebene PRACH durch die Basisstation.

8. Verfahren nach Anspruch 7, wobei es sich bei der vorgegebenen Regel speziell um Folgendes handelt:

   Beginnen mit dem Frequenzmultiplex-PRACH in dem ersten PRACH-Zeitschlitz gemäß der Regel "erst Frequenzdomäne, dann Zeitdomäne" und Nummerieren aller Frequenzmultiplex-PRACH-Kanäle in diesem Zeitschlitz gemäß der Abbildungssequenz der PRACH-Kanäle in der Frequenzdomäne oder gemäß den Positionen der PRACH-Kanäle in der Frequenzdomäne vom unteren Seitenband bis zum oberen Seitenband des Frequenzbands bis zum Frequenzmultiplex-PRACH in dem letzten PRACH-Zeitschlitz oder
   Beginnen mit dem PRACH mit dem niedrigsten Frequenzdomänen-Abbildungsindex gemäß der Regel "erst Zeitdomäne, dann Frequenzdomäne" und Nummerieren der PRACH-Kanäle mit einem gleichen Frequenzdomänenindex gemäß der Zeitfolgenbeziehung der PRACH-Zeitschlitze bis zu dem PRACH mit dem höchsten Frequenzdomänen-Abbildungsindex.

9. Verfahren nach Anspruch 1, wobei das Zuordnen des vorgegebenen PRACH, welchem der dedizierte Direktzugriffskopf entspricht, durch die Basisstation umfasst:

   Nummerieren von PRACH-Zeitschlitzen in dem Funkrahmen durch die Basisstation und
   Auswählen eines PRACH mit einem gleichen Frequenzdomänenindex in den ungeradzahligen oder geradzahligen PRACH-Zeitschlitzen als der vorgegebene PRACH durch die Basisstation.

10. Verfahren nach Anspruch 1, wobei das Zuordnen des vorgegebenen PRACH, welchem der dedizierte Direktzugriffskopf entspricht, durch die Basisstation umfasst:

    Nummerieren von PRACH-Kanälen in der Frequenzdomäne jedes PRACH-Zeitschlitzes in dem Funkrahmen gemäß ihrer Abbildungssequenz in der Frequenzdomäne oder gemäß ihren absoluten Positionen in der Frequenzdomäne und
    Auswählen eines PRACH in dem ersten PRACH-Zeitschlitz in dem Funkrahmen als ein Anfangs-PRACH; wobei in dem Funkrahmen die folgende Operation wiederholt wird: Ausgehen von dem gerade ausgewählten PRACH und Auswählen des PRACH mit einer nächsten Seriennummer, wenn der nächste PRACH-Zeitschlitz existiert und der PRACH mit der nächsten Seriennummer in der Frequenzdomäne dieses PRACH-Zeitschlitzes existiert; anderenfalls wird der PRACH mit Frequenzdomänenindex = 0 in diesem PRACH-Zeitschlitz ausgewählt.

11. Verfahren nach Anspruch 1, ferner umfassend den folgenden Schritt, ausgeführt, nachdem die Basisstation die Signalisierung, welche den erworbenen Zuordnungsindex für eine dedizierte Direktzugriffsressource umfasst, an das UE sendet:

    Erwerben des Zuordnungsindex für eine dedizierte Direktzugriffsressource aus der Signalisierung durch das UE und
    Erwerben der dedizierten Direktzugriffsressource durch das UE, welcher der Zuordnungsindex für eine dedizierte Direktzugriffsressource gemäß der Entsprechung zwischen dem Zuordnungsindex für eine dedizierte Direktzugriffsressource und der dedizierten Direktzugriffsressource entspricht, die vorab mit der Basisstation eingerichtet ist, und Beginnen eines Direktzugriffs auf Nicht-Konkurrenzbasis in dieser dedizierten Direktzugriffs-

griffsressource.

12. Basisstation, aufweisend:

ein Zuordnungsmodul (71), welches so konfiguriert ist, dass es einem UE einen dedizierten Direktzugriffskopf zuordnet und einen vorgegebenen PRACH zuordnet, welchem der dedizierte Direktzugriffskopf entspricht; und ein Sendemodul (73), welches mit dem Zuordnungsmodul (71) verbunden ist und für Folgendes konfiguriert ist:

Erwerben eines Zuordnungsindex für eine dedizierte Direktzugriffsressource, welchem der zugeordnete vorgegebene PRACH gemäß einer vorab eingerichteten Entsprechung zwischen dem Zuordnungsindex für eine dedizierte Direktzugriffsressource und einer dedizierten Direktzugriffsressource entspricht, wobei die vorab eingerichtete Entsprechung vorab durch die Basisstation und das UE eingerichtet ist; und Senden einer Signalisierung, welche den erworbenen Zuordnungsindex für eine dedizierte Direktzugriffsressource umfasst, an das UE, wobei die Signalisierung Zeitdomäneninformationen und Frequenzdomäneninformationen des vorgegebenen PRACH umfasst.

## Revendications

1. Procédé pour allouer la ressource à accès aléatoire dédiée, le procédé incluant les étapes consistant à :

allouer, par une station de base, un préambule à accès aléatoire dédié à un UE, et allouer, par la station de base, un PRACH prédéterminé auquel le préambule à accès aléatoire dédié correspond dans une trame radio ; acquérir, par la station de base, un indice d'allocation de ressource à accès aléatoire dédiée auquel le PRACH prédéterminé alloué correspond selon une correspondance pré-agencée entre l'indice d'allocation de ressource à accès aléatoire dédiée et la ressource à accès aléatoire dédiée, dans lequel la correspondance pré-agencée est pré-agencée par la station de base et l'UE ; et transmettre, par la station de base, une signalisation qui inclut l'indice d'allocation de ressource à accès aléatoire dédiée acquis, à l'UE, dans lequel la signalisation inclut des informations de domaine temporel et des informations de domaine fréquentiel du PRACH prédéterminé.

2. Procédé selon la revendication 1, dans lequel l'allocation, par la station de base, du PRACH auquel correspond le préambule à accès aléatoire dédié, inclut :

en étape 1, une acquisition, par la station de base, de M'intervalles de temps de PRACH continu ayant chacun un numéro de série m dans la trame radio, où m est 0, 1, ..., M'-1 respectivement ; et en étape 2, une sélection, par la station de base, d'un PRACH dans le domaine fréquentiel de chacun des M'intervalles de temps de PRACH en tant que PRACH prédéterminé, dans lequel, les intervalles de temps de PRACH sont L sous-trames à liaison ascendante continues que le PRACH occupe dans le domaine temporel, L est un nombre naturel et $L \geq 1$ ; ou l'intervalle de temps de PRACH est un intervalle de temps pilote à liaison ascendante que le PRACH occupe dans le domaine temporel ; et M' est un nombre naturel et $1 < M' \leq M$, et M est le nombre total d'intervalles de temps de PRACH dans la trame radio ; les intervalles de temps de PRACH dans la trame radio sont numérotés à l'avance en partant de 0 en fonction d'une séquence de domaines temporels.

3. Procédé selon la revendication 2, dans lequel l'étape 2 inclut spécifiquement :

dans l'intervalle de temps de PRACH avec un numéro de série m=0, une sélection, par la station de base, d'un PRACH avec un indice de domaine fréquentiel=0 en tant que PRACH prédéterminé ; et dans l'intervalle de temps de PRACH avec un numéro de série $0 < m \leq M'$, une sélection, par la station de base, d'un PRACH avec un indice de domaine fréquentiel=1 dans le $m^{ème}$ intervalle de temps de PRACH en tant que PRACH prédéterminé quand une condition prédéterminée est satisfaite, sinon une sélection d'un PRACH avec un indice de domaine fréquentiel=0 dans le $m^{ème}$ intervalle de temps de PRACH en tant que PRACH prédéterminé ; dans lequel, la condition prédéterminée est que le nombre des canaux PRACH à multiplexage de domaine fréquentiel actuel est supérieur à 1, et une sélection, par la station de base, d'un PRACH avec un indice de domaine fréquentiel=0 dans le $(m-1)^{ème}$ intervalle de temps de PRACH en tant que PRACH prédéterminé.

4. Procédé selon la revendication 2, dans lequel l'étape 2 inclut spécifiquement :

dans l'intervalle de temps de PRACH avec un numéro de série m=0, une sélection, par la station de base, d'un PRACH avec un indice de domaine fréquentiel=1 en tant que PRACH prédéterminé ; et

dans l'intervalle de temps de PRACH avec un numéro de série 0<m≤M', une sélection, par la station de base, d'un PRACH avec un indice de domaine fréquentiel=1 dans le m$^{ème}$ intervalle de temps de PRACH en tant que PRACH prédéterminé quand une condition prédéterminée est satisfaite, sinon une sélection d'un PRACH avec un indice de domaine fréquentiel=0 dans le m$^{ème}$ intervalle de temps de PRACH en tant que PRACH prédéterminé ; dans lequel, la condition prédéterminée est que le nombre des canaux PRACH à multiplexage de domaine fréquentiel actuel est supérieur à 1, et une sélection, par la station de base, d'un PRACH avec un indice de domaine fréquentiel=0 dans le (m-1)$^{ème}$ intervalle de temps de PRACH en tant que PRACH prédéterminé.

5. Procédé selon la revendication 1, dans lequel l'allocation, par la station de base, du PRACH prédéterminé auquel correspond le préambule à accès aléatoire dédié, inclut
une sélection, par la station de base, d'un PRACH avec un même indice de domaine fréquentiel dans chaque intervalle de temps de PRACH dans la trame radio en tant que PRACH prédéterminé, dans lequel, l'intervalle de temps de PRACH inclut L sous-trames à liaison ascendante que le PRACH occupe dans le domaine temporel, L est un nombre naturel et L#1 ; ou l'intervalle de temps de PRACH est un intervalle de temps pilote à liaison ascendante qu'occupe le PRACH dans le domaine temporel.

6. Procédé selon la revendication 1, dans lequel l'allocation, par la station de base, du PRACH auquel correspond le préambule à accès aléatoire dédié à l'UE, inclut :

une sélection, par la station de base, d'un PRACH dans la trame radio en tant que PRACH prédéterminé.

7. Procédé selon la revendication 6, dans lequel la sélection, par la station de base, d'un PRACH dans la trame radio en tant que PRACH prédéterminé inclut :

une numérotation, par la station de base, de tous les canaux PRACH dans la trame radio en fonction d'une règle prédéfinie ; et

une sélection, par la station de base, d'un PRACH avec un numéro de série en tant que PRACH prédéterminé.

8. Procédé selon la revendication 7, dans lequel la règle prédéfinie est spécifiquement :

un démarrage à partir du PRACH à multiplexage de domaine fréquentiel dans le premier intervalle de temps PRACH selon la règle de domaine fréquentiel d'abord puis de domaine temporel, et une numérotation de tous les canaux PRACH de multiplexage de domaine fréquentiel dans cet intervalle de temps en fonction de la séquence de mise en correspondance des canaux PRACH dans le domaine fréquentiel ou en fonction des emplacements des canaux PRACH dans le domaine fréquentiel, depuis la bande latérale inférieure vers la bande latérale supérieure de la bande de fréquence jusqu'au PRACH de multiplexage de domaine fréquentiel dans le dernier intervalle de temps de PRACH ; ou

un démarrage à partir du PRACH avec le plus petit indice de mise en correspondance de domaine fréquentiel en fonction de la règle de domaine temporel d'abord puis de domaine fréquentiel, et une numérotation des canaux PRACH avec un même indice de domaine fréquentiel en fonction de la relation de séquence temporelle d'intervalles de temps de PRACH jusqu'au PRACH ayant le plus grand indice de mise en correspondance de domaine fréquentiel.

9. Procédé selon la revendication 1, dans lequel l'allocation, par la station de base, du PRACH prédéterminé auquel correspond le préambule à accès aléatoire dédié, inclut :

une numérotation, par la station de base, d'intervalles de temps de PRACH dans la trame radio ; et

une sélection, par la station de base, du PRACH avec un même indice de domaine fréquentiel dans les intervalles de temps de PRACH impairs ou pairs en tant que PRACH prédéterminé.

10. Procédé selon la revendication 1, dans lequel l'allocation, par la station de base, du PRACH prédéterminé auquel correspond le préambule à accès aléatoire dédié, inclut :

une numérotation de canaux PRACH dans le domaine fréquentiel de chaque intervalle de temps de PRACH dans la trame radio selon leur séquence de mise en correspondance dans le domaine fréquentiel, ou selon leurs emplacements absolus dans le domaine fréquentiel ; et

une sélection d'un PRACH dans le premier intervalle de temps de PRACH dans la trame radio en tant que PRACH initial ; dans lequel, l'opération suivante est répétée dans la trame radio : avancer depuis le PRACH juste sélectionné, et sélectionner le PRACH avec un numéro de série suivant si l'intervalle de temps de PRACH suivant existe et le PRACH avec le numéro de série suivant existe dans le domaine fréquentiel de cet intervalle de temps de PRACH ; sinon, le PRACH avec un indice de domaine fréquentiel=0 dans cet intervalle de temps de PRACH sera sélectionné.

**11.** Procédé selon la revendication 1, comprenant en outre l'étape, effectuée après que la station de base a transmis la signalisation qui inclut l'indice d'allocation de ressource à accès aléatoire dédiée acquis à l'UE, consistant à :

acquérir, par l'UE, l'indice d'allocation de ressource à accès aléatoire dédiée à partir de la signalisation ; et
acquérir, par l'UE, la ressource à accès aléatoire dédiée à laquelle l'indice d'allocation de ressource à accès aléatoire dédiée correspond selon la correspondance entre l'indice d'allocation de ressource à accès aléatoire dédiée et la ressource à accès aléatoire dédiée, qui est pré-agencée avec la station de base, et le lancement d'un accès aléatoire sur la base d'une non-contention dans cette ressource à accès aléatoire dédiée.

**12.** Station de base, comprenant :

un module d'allocation (71) configuré pour allouer un préambule à accès aléatoire dédié à un UE, et pour allouer un PRACH prédéterminé auquel correspond le préambule à accès aléatoire dédié ; et
un module de transmission (73) connecté au module d'allocation (71) et configuré pour :

acquérir un indice d'allocation de ressource à accès aléatoire dédiée auquel le PRACH prédéterminé alloué correspond en fonction d'une correspondance pré-agencée entre l'indice d'allocation de ressource à accès aléatoire dédiée et une ressource à accès aléatoire dédiée, dans laquelle la correspondance pré-agencée est pré-agencée par la station de base et l'UE ; et
transmettre une signalisation qui inclut l'indice d'allocation de ressource à accès aléatoire dédiée acquis à l'UE, dans lequel la signalisation inclut des informations de domaine temporel et des informations de domaine fréquentiel du PRACH prédéterminé.

FIG. 1

FIG. 2A

One radio frame (10ms)

One half frame (5ms)

One time slot (0.5ms)

One subframe (1ms)

Subframe #0, Subframe #1, Subframe #2, Subframe #3, Subframe #4, Subframe #5, Subframe #6, Subframe #7, Subframe #8, Subframe #9

Time slot #0, Time slot #1, Time slot #2, Time slot #3, Time slot #4, Time slot #5, Time slot #6, Time slot #7, Time slot #8, Time slot #9, Time slot #10, Time slot #11, Time slot #12, Time slot #13, Time slot #14, Time slot #15, Time slot #16, Time slot #17, Time slot #18, Time slot #19

Radio frame 10ms

FIG. 2B

Half frame 5ms

Time slot    1ms

| Subframe #0 | | | | Subframe #2 | Subframe #3 | Subframe #4 | Subframe #5 | | | | Subframe #7 | Subframe# 8 | Subframe #9 |

Subframe

DwPTS   GP   UpPTS

DwPTS   GP   UpPTS

FIG. 3

| CP | Sequence |
|----|----------|

$$\overleftrightarrow{T_{CP}} \qquad \overleftrightarrow{T_{SEQ}}$$

$\longleftrightarrow$ Preamble $\longleftrightarrow$

FIG. 4

```
        ( Start )
            |
            v
+-----------------------------------------+
| The base station allocates the dedicated |
| random access preamble to the UE, and    |      S401
| allocates the PRACH to which the          |
| dedicated random access preamble          |
| corresponds                               |
+-----------------------------------------+
            |
            v
+-----------------------------------------+
| The base station transmits signaling to   |      S403
| the UE                                    |
+-----------------------------------------+
            |
            v
         ( End )
```

FIG. 5

UE

Base Station

S501. The base station allocates the dedicated random access preamble to the UE, and allocates the predetermined PRACH to which the dedicated random access preamble corresponds

←————S503. Signaling————

S505. Transmitting of the dedicated random access preamble————→

←————S507. Random access responding————

FIG. 6A

FIG. 6B

FIG. 7

```
┌──────────────────┐              ┌──────────────────┐
│    Allocation    │─────────────▶│   Transmission   │
│   module 71      │              │   module 73      │
└──────────────────┘              └──────────────────┘
```

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 0074416 A
- WO 2008097023 A

- WO 2008023932 A

**Non-patent literature cited in the description**

- Valid PRACH resource for dedicated preamble. 3GPP DRAFT; R2-081672 VALID PRACH RESOURCE FOR DEDICATED PREAMBLE, 3RD GENERATION PARTNERSHIP PROJECT (3GPP). MOBILE COMPETENCE CENTRE, 25 March 2008